(19) **Europäisches Patentamt / European Patent Office / Office européen des brevets**

(11) **EP 4 553 861 A1**

(12) **EUROPEAN PATENT APPLICATION**
published in accordance with Art. 153(4) EPC

(43) Date of publication:
**14.05.2025 Bulletin 2025/20**

(21) Application number: **23835609.1**

(22) Date of filing: **07.07.2023**

(51) International Patent Classification (IPC):
**H01B 13/00** $^{(2006.01)}$    **H01M 10/0562** $^{(2010.01)}$

(52) Cooperative Patent Classification (CPC):
**H01B 13/00; H01M 10/0562;** Y02E 60/10

(86) International application number:
**PCT/JP2023/025217**

(87) International publication number:
**WO 2024/010078 (11.01.2024 Gazette 2024/02)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **07.07.2022  JP 2022109696**
**09.05.2023  JP 2023077354**

(71) Applicant: **Idemitsu Kosan Co.,Ltd.**
**Tokyo 100-8321 (JP)**

(72) Inventors:
- **OKAMOTO Yuji**
  **Tokyo 100-8321 (JP)**
- **KAKINUMA Takahiro**
  **Tokyo 100-8321 (JP)**

(74) Representative: **Vossius & Partner**
**Patentanwälte Rechtsanwälte mbB**
**Siebertstrasse 3**
**81675 München (DE)**

(54) **METHOD FOR PRODUCING SULFIDE SOLID ELECTROLYTE**

(57)    It is a method for producing a sulfide solid electrolyte including mixing, in a solvent, a raw material-containing substance that contains a plurality of raw materials each containing at least one atom selected from a lithium atom, a phosphorus atom, a sulfur atom, and a halogen atom, and subsequently heating the mixture, wherein the solvent includes an organic solvent, which is an ether solvent and an alcohol solvent, in an amount of 60% by volume or more based on a total amount of the solvent, and the raw material-containing substance contains elemental sulfur and lithium sulfide.

EP 4 553 861 A1

# EP 4 553 861 A1

**Description**

Technical Field

The present invention relates to a method for producing a sulfide solid electrolyte.

Background Art

In recent years, with the rapid spread of information-related devices such as personal computers, video cameras, and mobile phones, and communication devices and the like, the development of batteries used as a power source for the devices has been regarded as important. Conventionally, electrolytic solution containing flammable organic solvents have been used in batteries used for such applications, however by making the battery all-solid, a battery in which the electrolytic solution is replaced with a solid electrolyte layer has been developed because a flammable organic solvent is not used in the battery, simplification of safety devices is achieved, and the production cost and productivity are excellent.

Methods for producing a solid electrolyte used for a solid electrolyte layer are broadly divided into a solid phase method and a liquid phase method, and the liquid phase method includes a homogeneous method in which a solid electrolyte material is completely dissolved in a solvent, and a heterogeneous method in which a solid electrolyte material is not completely dissolved and a solid electrolyte is produced through a suspension of a solid-liquid coexistence. For example, among the liquid phase methods, as a homogeneous method, a method of dissolving a solid electrolyte in a solvent and re-precipitating the solid electrolyte is known (for example, see PTL 1), and further, as a heterogeneous method, a method of reacting a solid electrolyte raw material such as lithium sulfide in a solvent containing a polar aprotic solvent (for example, see PTLs 2 and 3), and moreover, a method for producing a solid electrolyte using a specific compound having an amino group as a complexing agent (for example, see PTLs 4 and 5) are known. NPL 1 describes a method of preparing a tetrahydrofuran-ethanol precursor solution of $Li_6PS_5Br$ using tetrahydrofuran and ethanol, drying the solution, and heating the solution to produce a solid electrolyte having an argyrodite-type crystal structure having a composition of $Li_6PS_5Br$.

In addition, NPLs 2 and 3 disclose that a crystalline solid electrolyte having a composition of $Li_7P_3S_{11}$ is produced by adding $Li_2S$, $P_2S_5$, and S (in a molar ratio of 7 : 3 : x (x = 3, 5, and 7)) to a mixed solvent of acetonitrile, tetrahydrofuran, and ethanol (volume ratio of 1 : 1 : 0.05) to generate lithium polysulfides and highly reactive sulfur radicals, which are then stirred for several minutes, dried under vacuum, and heated at a heating temperature of 270°C, 350°C, etc.

Citation List

Patent Literature

PTL 1:JP 2014-191899 A
PTL 2:WO 2014/192309 A
PTL 3:WO 2018/054709 A
PTL 4:WO 2020/105737 A
PTL 5:WO 2021/230189 A

Non Patent Literature

NPL 1:J. Mater. Chem. A, 2019, 7, 558-566
NPL 2:The 62nd Battery Symposium in Japan proceedings, published on November 29, 2021, All-solid Battery/-Sulfide Electrolyte, 3E01
NPL 3:Adv. Energy Sustainability Res. 2022, 3, 2200019

Summary of Invention

Technical Problem

The present invention has been made in view of the above circumstances, and has an object to efficiently provide a sulfide solid electrolyte having improved ionic conductivity.

Solution to Problem

A method for producing a sulfide solid electrolyte according to the present invention is

a method for producing a sulfide solid electrolyte including
mixing, in a solvent, a raw material-containing substance that contains a plurality of raw materials each containing at least one atom selected from a lithium atom, a phosphorus atom, a sulfur atom, and a halogen atom, and subsequently heating the mixture, wherein
the solvent includes an organic solvent, which is ether solvent and an alcohol solvent, in an amount of 60% by volume or more based on a total amount of the solvent, and
the raw material-containing substance contains elemental sulfur and lithium sulfide.

Advantageous Effects of Invention

According to the present invention, it is possible to efficiently provide a sulfide solid electrolyte having improved ionic conductivity.

Brief Description of Drawings

Fig. 1 is an X-ray diffraction spectrum of the powder obtained in Example 1.
Fig. 2 is an X-ray diffraction spectrum of the powder obtained in Examples 2 to 7.
Fig. 3 is an X-ray diffraction spectrum of the powder obtained in Examples 2 to 7.
Fig. 4 is an X-ray diffraction spectrum of the powder obtained in Example 10.
Fig. 5 is an X-ray diffraction spectrum of the powder obtained in Comparative Example 1.
Fig. 6 is an X-ray diffraction spectrum of the powder obtained in Examples 8 and 9.
Fig. 7 is an X-ray diffraction spectrum of the powder obtained in Examples 8 and 9.

Description of Embodiments

Hereinafter, an embodiment of the present invention (hereinafter, sometimes referred to as "the present embodiment") will be described. In addition, in the description herein, the numerical values of the upper limit and the lower limit relating to the numerical range of "or more", "or less", and "to" are numerical values that can be arbitrarily combined, and the numerical values of the examples can also be used as the numerical values of the upper limit and the lower limit. Further, the specifications considered to be preferable can be arbitrarily adopted. That is, one specification considered to be preferable can be adopted in combination with one or a plurality of other specifications considered to be preferable. It can be said to be more desirable to combine the preferred ones with each other.

(Findings Obtained by the Inventors to Reach the Present Invention)

As a result of intensive studies to solve the above-described problems, the inventors have found the following matters, and have completed the present invention.

In order to put all-solid batteries into practical use in recent years, a liquid phase method has attracted attention as a method capable of being simply synthesized in a large amount in addition to versatility and applicability. A solid phase method, as typified by a mechanical milling method, includes a method of grinding and mixing solid electrolyte raw materials in a grinder and reacting the raw materials obtain a solid electrolyte. However, the cost of equipment is high and a large initial investment is required, making it difficult to reduce costs.

On the other hand, for the liquid phase method, for example, the method described in PTL 1 involves mechanical milling $Li_2S$ and $P_2S_5$ (80 : 20) for 20 hours, and then dissolving the mixture in N-methylformamide (NMF) and drying to obtain a solid electrolyte, which requires 20 hours of mechanical milling. In the method described in PTL 2, $Li_2S$ and $P_2S_5$ are contacted and reacted in a mixed solvent of a hydrocarbon solvent (toluene) and a polar aprotic solvent (tetrahydrofuran) for 24 hours, and in the method described in PTL 3, stirring is performed for about 10 days when producing $Li_3PS_4 \cdot DME$ (electrolyte precursor; complex) in dimethoxyethane (DME). Further, in the method using a complexing agent described in PTLs 4 and 5, the solid electrolyte raw material is stirred with the complexing agent for 12 to 72 hours or even longer to allow the reaction to proceed, and in the method described in NPL 1, the reaction is allowed to proceed overnight, i.e., for about 12 hours. As described above, the reaction time is long in the conventional production methods, and therefore there is a demand for improved production efficiency.

In addition, in the method described in NPL 1, drying is performed for 3 hours to remove tetrahydrofuran and ethanol. However, some of the remaining ethanol may react with the solid electrolyte to produce oxides as impurities. $Li_2S$, which is widely used as a raw material for solid electrolytes, partially reacts with an alcohol solvent such as ethanol to produce lithium alkoxide such as lithium ethoxide, which does not contribute to reactions with raw materials such as phosphorus sulfide (for example, diphosphorus pentasulfide ($P_2S_5$)) that are widely used together with $Li_2S$. Therefore, the purity of the sulfide solid electrolyte may decrease, and the ionic conductivity may decrease, and there is a demand for improving the quality.

In the methods described in NPLs 2 and 3, a crystalline sulfide solid electrolyte is obtained by stirring for several minutes, drying for one hour, and heating for one hour, and it can be said that the method has excellent production efficiency. However, since the content is limited to crystalline solid electrolytes having the composition of $Li_7P_3S_{11}$, it is unclear whether it can be applied to other solid electrolytes, such as solid electrolytes containing halogen atoms. These non-patent literatures state that the action of ethanol on the lithium of lithium polysulfide generates highly reactive sulfur radicals. Therefore, when a lithium halide containing Li, like $Li_2S$, is used as a raw material, the mechanism for generating sulfur radicals may be inhibited, and it is expected that the reaction may not proceed efficiently.

As described above, the conventional techniques have both advantages and disadvantages, and there is room for improvement in producing a sulfide solid electrolyte having high ionic conductivity with high production efficiency.

Therefore, the inventors focused on elemental sulfur as a raw material. When the use of elemental sulfur as a raw material and the use of a raw material containing a halogen atom to improve ionic conductivity was investigated, it was found that a sulfide solid electrolyte with improved ionic conductivity can be obtained in an extremely short period of time.

(Regarding various aspects of the present embodiment)

The method for producing a sulfide solid electrolyte according to a first aspect of the present embodiment is

a method for producing a sulfide solid electrolyte including
mixing, in a solvent, a raw material-containing substance that contains a plurality of raw materials each containing at least one atom selected from a lithium atom, a phosphorus atom, a sulfur atom, and a halogen atom, and subsequently heating the mixture, wherein
the solvent includes an organic solvent, which is an ether solvent and an alcohol solvent, in an amount of 60% by volume or more based on a total amount of the solvent, and
the raw material-containing substance contains elemental sulfur and lithium sulfide.

In the method for producing a sulfide solid electrolyte of the present embodiment, it is necessary to use a combination of elemental sulfur and lithium sulfide as raw materials. It is believed that in the solvent, elemental sulfur reacts with lithium sulfide to become lithium polysulfides, and sulfur radicals are generated. Sulfur radicals are highly reactive, and promote reactions with other raw materials, such as diphosphorus pentasulfide and other raw materials containing halogen atoms, to generate soluble polysulfides (hereinafter simply referred to as "polysulfides"), which are precursors of sulfide solid electrolytes (hereinafter also referred to as "electrolyte precursors"). It is believed that by decomposing the polysulfides by heating or the like, a sulfide solid electrolyte with improved ionic conductivity can be efficiently produced. Furthermore, as a result of further research, the inventors have found that in order to promote the reaction between elemental sulfur and other raw materials, not only sulfur radicals but also sulfur active species including sulfur anions such as $S_4$ dianion contribute to the production of an electrolyte precursor (polysulfide) by promoting reactions with other raw materials, and further that it is important to generate these sulfur active species in a well-balanced manner.

In addition, in the production method of the present embodiment, it is necessary to use an organic solvent such as an ether solvent and an alcohol solvent as the solvent, and to use the organic solvent in an amount of 60% by volume or more based on the total amount of the solvent. By using a solvent containing at least an ether solvent and an alcohol solvent, which are organic solvents having oxygen atoms, in a predetermined amount or more, as the solvent, sulfur active species such as sulfur radicals and anions suitable for forming an electrolyte precursor are generated in a well-balanced manner, and thus the reaction with other raw materials is promoted, resulting in efficient production of a sulfide solid electrolyte with improved ionic conductivity. In this regard, for example, in the methods described in NPLs 2 and 3 above, an ether solvent (tetrahydrofuran) and a nitrile solvent (acetonitrile) are used in equal amounts (41.7 to 49.8% by volume each), and the total amount of the ether solvent and the alcohol solvent used is about 50.2 to 58.3% by volume, which is thought to result in a failure to generate sulfur active species such as sulfur radicals and anions suitable for forming an electrolyte precursor in a well-balanced manner. Therefore, as mentioned above, it is limited to crystalline solid electrolytes having the composition of $Li_7P_3S_{11}$, and it is unclear whether it can be applied to other solid electrolytes, such as sulfide solid electrolytes containing halogen atoms.

According to the production method of the present embodiment, by using a raw material-containing substance that contains a plurality of raw materials each containing at least one atom selected from a lithium atom, a phosphorus atom, a sulfur atom, and a halogen atom, and elemental sulfur and lithium sulfide, and mixing the raw material-containing substance in a specific solvent, the generation of sulfur active species such as sulfur radicals suitable for forming an electrolyte precursor is promoted in a well-balanced manner, and the generation of polysulfide, which serves as a precursor of a sulfide solid electrolyte, is promoted, making it possible to efficiently produce a sulfide solid electrolyte with improved ionic conductivity as a result.

By mixing the raw material-containing substance, a precursor for generating a sulfide solid electrolyte by further heating, an amorphous sulfide solid electrolyte, and even a crystalline sulfide solid electrolyte can be generated. By mixing, a soluble polysulfide, which is an electrolyte precursor, is generated, and then by heating, the polysulfide is decomposed to become an amorphous sulfide solid electrolyte or a crystalline sulfide solid electrolyte, and the crystallinity of the crystalline sulfide solid electrolyte is improved. The solvent is also removed. Therefore, in the production method of the present embodiment, heating is performed mainly for the decomposition of the polysulfide, removal of the solvent, and crystallization. In addition, although the removal of elemental sulfur generated by the decomposition of the polysulfide can also be performed by evaporation through heating, methods other than heating, such as solvent washing and hydrodesulfurization, may also be applied.

The method for producing a sulfide solid electrolyte according to a second aspect of the present embodiment is a method in which, in the first aspect,

the solvent is an ether solvent and an alcohol solvent.

By using an ether solvent and an alcohol solvent as the solvent, the generation of sulfur active species such as sulfur radicals suitable for the formation of an electrolyte precursor is advanced in a well-balanced manner, and the reaction of the raw materials is promoted, thereby further promoting the formation of the electrolyte precursor (polysulfide) and making it possible to more efficiently produce a sulfide solid electrolyte with improved ionic conductivity.

The method for producing a sulfide solid electrolyte according to a third aspect of the present embodiment is a method in which, in the first or second aspect,

the solvent includes an alcohol solvent, and the alcohol solvent is used in an amount of 0.030 moles or more and 5.0 mole or less based on 1.0 mole of the lithium sulfide,
and the method for producing a sulfide solid electrolyte according to a fourth aspect of the present embodiment is a method in which, in the first to third aspects,
the solvent includes an ether solvent, and a content of the ether solvent based on the total amount of the solvent is 50.0% by volume or more.

When an alcohol solvent is used, by setting the amount thereof within the above range, and when an ether solvent is used, by setting the amount thereof within the above range, the generation of sulfur active species such as sulfur radicals suitable for the formation of an electrolyte precursor is advanced in a well-balanced manner, and the reaction of the raw materials is promoted, thereby further promoting the formation of the electrolyte precursor (polysulfide) and making it possible to more efficiently produce a sulfide solid electrolyte with improved ionic conductivity.

The method for producing a sulfide solid electrolyte according to a fifth aspect of the present embodiment is a method in which, in the first to fourth aspects,

the halogen atom is at least one atom selected from a chlorine atom, a bromine atom, and an iodine atom.

When the sulfide solid electrolyte contains a halogen atom, it has high ionic conductivity. Among these, by containing any one of a chlorine atom, a bromine atom, and an iodine atom, it becomes easy to form an argyrodite type crystal structure or a thio-LISICON Region II type crystal structure, which exhibits particularly high ionic conductivity.

The method for producing a sulfide solid electrolyte according to a sixth aspect of the present embodiment is a method in which, in the first to fifth aspects

the heating is performed at a heating temperature of 20°C or higher and 500 °C or lower.

As described above, in the production method of the present embodiment, heating is performed mainly for the decomposition of the electrolyte precursor (polysulfide), removal of the solvent, and crystallization. When the heating temperature in the heating is within the above range, it is possible to more efficiently and reliably remove the solvent and achieve crystallization.

The method for producing a sulfide solid electrolyte according to a seventh aspect of the present embodiment is a method in which, in the sixth aspect,

the heating is performed at a heating temperature of 20°C or higher and 300°C or lower,
and the method for producing a sulfide solid electrolyte according to an eighth aspect of the present embodiment is a method in which, in the seventh aspect,
the heating is performed by a first heating with a heating temperature of 20°C or higher and lower than 150°C, and a second heating with a heating temperature of 150°C or higher and 300°C or lower.

The heating temperature during crystallization may vary depending on the type of sulfide solid electrolyte to be obtained, and therefore cannot be generalized. However, by setting the heating temperature at 20°C or higher and 300°C or lower, a sulfide solid electrolyte having a thio-LISICON Region II type crystal structure can be efficiently produced.

As described above, in the production method of the present embodiment, heating is performed mainly for the decomposition of the electrolyte precursor (polysulfide), removal of the solvent, and crystallization. When the heating temperature in the heating is within the above range, it is possible to more efficiently and reliably remove the solvent and achieve crystallization.

Furthermore, by performing heating in multiple stages, namely the first heating and the second heating, it is possible to more efficiently perform the decomposition of the polysulfide, the removal of the solvent, and crystallization. Moreover, elemental sulfur produced by decomposition of the polysulfide can also be removed by heating. The removal of elemental sulfur is not limited to heating, and can also be achieved by other methods such as solvent washing and hydrodesulfurization.

The method for producing a sulfide solid electrolyte according to a ninth aspect of the present embodiment is a method in which, in the sixth aspect,

the heating is performed at a heating temperature of 200°C or higher and 500°C or lower,
and the method for producing a sulfide solid electrolyte according to a tenth aspect of the present embodiment is a method in which, in the ninth aspect,
the heating is performed by a heating with a heating temperature of 200°C or higher and lower than 350°C, and a heating with a heating temperature of 350°C or higher and 500°C or lower.

A sulfide solid electrolyte having an argyrodite type crystal structure can be efficiently produced by setting the heating temperature at 200°C or higher and 500°C or lower. Moreover, multi-stage heating is performed in the same manner as in the method for producing a sulfide solid electrolyte according to the tenth aspect.

The method for producing a sulfide solid electrolyte according to an eleventh aspect of the present embodiment is a method in which, in the first to tenth aspects,
a crystalline sulfide solid electrolyte having an argyrodite type crystal structure or a thio-LISICON Region II type crystal structure is produced.

In the production method of the present embodiment, it is possible to produce a desired sulfide solid electrolyte by changing the type and blending ratio of the solid electrolyte raw materials contained in the raw material-containing substance. A crystalline sulfide solid electrolyte having an argyrodite type crystal structure and a crystalline sulfide solid electrolyte having a thio-LISICON Region II type crystal structure are known as sulfide solid electrolytes with extremely high ionic conductivity, and are preferable as the sulfide solid electrolytes to be obtained by the production method of the present embodiment.

(Sulfide Solid Electrolyte)

In the description herein, the "solid electrolyte" means an electrolyte that maintains a solid state at 25°C under a nitrogen atmosphere. The sulfide solid electrolyte in the present embodiment contains a lithium atom, a sulfur atom, a phosphorus atom, and a halogen atom, and has ionic conductivity attributed to the lithium atom.

The "sulfide solid electrolyte" includes both an amorphous sulfide solid electrolyte and a crystalline sulfide solid electrolyte.

In the description herein, the crystalline sulfide solid electrolyte is a sulfide solid electrolyte in which a peak derived from the solid electrolyte is observed in an X-ray diffraction pattern in X-ray diffractometry, and the presence or absence of a peak derived from a raw material of the sulfide solid electrolyte is not considered. That is, the crystalline sulfide solid electrolyte includes a crystal structure derived from the solid electrolyte, and a part thereof may be a crystal structure derived from the solid electrolyte, or the whole thereof may be a crystal structure derived from the solid electrolyte. As long as the crystalline sulfide solid electrolyte has the X-ray diffraction pattern as described above, a part of the crystalline sulfide solid electrolyte may include an amorphous sulfide solid electrolyte. Therefore, the crystalline sulfide solid electrolyte includes a so-called glass ceramic obtained by heating an amorphous sulfide solid electrolyte to a crystallization temperature or higher.

In addition, in the description herein, the amorphous sulfide solid electrolyte is a halo pattern in which a peak other than a peak derived from a material is not substantially observed in an X-ray diffraction pattern by an X-ray diffractometry, and the presence or absence of a peak derived from a raw material of the sulfide solid electrolyte does not matter.

[Method for producing a sulfide solid electrolyte]

The method for producing a sulfide solid electrolyte of the present embodiment is

a method for producing a sulfide solid electrolyte including

mixing, in a solvent, a raw material-containing substance that contains a plurality of raw materials each containing at least one atom selected from a lithium atom, a phosphorus atom, a sulfur atom, and a halogen atom, and subsequently heating the mixture, wherein

the solvent includes an organic solvent, which is an ether solvent and an alcohol solvent, in an amount of 60% by volume or more based on a total amount of the solvent, and

the raw material-containing substance contains elemental sulfur and lithium sulfide.

[Mixing raw material-containing substance]

The production method of the present embodiment includes mixing, in a solvent, a raw material-containing substance that contains a plurality of raw materials each containing at least one atom selected from a lithium atom, a phosphorus atom, a sulfur atom, and a halogen atom.

Regarding the production method of the present embodiment, the raw material-containing substance will be explained first.

(Raw Material-Containing Substance)

The raw material-containing substance used in the present embodiment is a substance that contains a plurality of raw materials each containing at least one atom selected from a lithium atom, a sulfur atom, a phosphorus atom, and a halogen atom, and includes elemental sulfur and lithium sulfide. That is, the raw material-containing substance is a substance that contains at least elemental sulfur and lithium sulfide, and further contains a plurality of raw materials each containing at least one atom selected from a lithium atom, a sulfur atom, a phosphorus atom, and a halogen atom.

Examples of the raw material contained in the raw material-containing substance includes, a raw material containing at least two atoms selected from the above four atoms, such as lithium sulfides; lithium halides such as lithium fluoride, lithium chloride, lithium bromide, and lithium iodide; phosphorus sulfides such as diphosphorus trisulfide ($P_2S_3$) and diphosphorus pentasulfide ($P_2S_5$); phosphorus halides such as various phosphorus fluorides ($PF_3$ and $PF_5$), various phosphorus chlorides ($PCl_3$, $PCl_5$, and $P_2Cl_4$), various phosphorus bromides ($PBr_3$ and $PBr_5$), and various phosphorus iodides ($PI_3$ and $P_2I_4$); and thiophosphoryl halides such as thiophosphoryl fluoride ($PSF_3$), thiophosphoryl chloride ($PSCl_3$), thiophosphoryl bromide ($PSBr_3$), thiophosphoryl iodide ($PSI_3$), thiophosphoryl dichloride fluoride ($PSCl_2F$), and thiophosphoryl dibromide fluoride ($PSBr_2F$); and halogen simple substances such as fluorine ($F_2$), chlorine ($Cl_2$), bromine ($Br_2$), and iodine ($I_2$), and preferably chlorine ($Cl_2$), bromine ($Br_2$), and iodine ($I_2$).

Examples that can be used as raw materials other than the above include a raw material containing at least one atom selected from the above four kinds of atoms and containing atoms other than the four kinds of atoms, more specifically, lithium compounds such as lithium oxide, lithium hydroxide, and lithium carbonate; alkali metal sulfides such as sodium sulfide, potassium sulfide, rubidium sulfide, cesium sulfide; metal sulfides such as silicon sulfide, germanium sulfide, boron sulfide, gallium sulfide, tin sulfide ($SnS$, $SnS_2$), aluminum sulfide, and zinc sulfide; phosphate compounds such as sodium phosphate and lithium phosphate; alkali metal halides other than lithium, such as sodium halides such as sodium iodide, sodium fluoride, sodium chloride, and sodium bromide; metal halides such as aluminum halide, silicon halide, germanium halide, arsenic halide, selenium halide, tin halide, antimony halide, tellurium halide, and bismuth halide; and phosphorus oxyhalides such as phosphorus oxychloride ($POCl_3$) and phosphorus oxybromide ($POBr_3$).

Among the above, lithium sulfides, phosphorus sulfide such as diphosphorus trisulfide ($P_2S_3$) and diphosphorus pentasulfide ($P_2S_5$), halogen simple substances such as fluorine ($F_2$), chlorine ($Cl_2$), bromine ($Br_2$), and iodine ($I_2$), and lithium halides such as lithium fluoride, lithium chloride, lithium bromide, and lithium iodide are preferred. Furthermore, when introducing an oxygen atom into the solid electrolyte, phosphoric acid compounds such as lithium oxide, lithium hydroxide, and lithium phosphate are preferred.

As the halogen atom, a chlorine atom, a bromine atom and an iodine atom are preferred, and at least one selected from these atoms is preferred.

Thus, as the lithium halide, lithium chloride, lithium bromide and lithium iodide are preferred, and as the halogen simple substance, chlorine ($Cl_2$), bromine ($Br_2$) and iodine ($I_2$) are preferred. In addition, these may be used alone or in combination of a plurality of kinds thereof.

Preferred combinations of the raw materials preferably include, for example, a combination of lithium sulfide, elemental sulfur, diphosphorus pentasulfide, and lithium halide, and a combination of lithium sulfide, elemental sulfur, diphosphorus pentasulfide, and a halogen simple substance; and as the lithium halide, lithium chloride, lithium bromide, and lithium iodide are preferred, and as the halogen simple substance, chlorine, bromine and iodine are preferred.

In the present embodiment, $Li_3PS_4$ containing a $PS_4$ structure can also be used as part of the raw material. Specifically, $Li_3PS_4$ is prepared by producing it first, etc., and used as a raw material.

The content of $Li_3PS_4$ relative to the total raw materials is preferably 60 to 100% by mole, more preferably 65 to 90% by mole, and even more preferably 70 to 80% by mole.

Further, when using $Li_3PS_4$ and a halogen simple substance, the content of the halogen simple substance relative to $Li_3PS_4$ is preferably 1 to 50% by mole, more preferably 10 to 40% by mole, even more preferably 20 to 30% by mole, and further more preferably 22 to 28% by mole.

The lithium sulfide used in the present embodiment is preferably particles.

The average particle diameter ($D_{50}$) of the lithium sulfide particles is preferably 0.1 $\mu$m or more and 1000 $\mu$m or less, more preferably 0.5 $\mu$m or more and 100 $\mu$m or less, and even more preferably 1 $\mu$m or more and 20 $\mu$m or less. In the description herein, the average particle diameter ($D_{50}$) is a particle diameter which reaches 50% (volume-based) of the whole by sequentially integrating particles from the smallest particle diameter when a particle size distribution integration curve is drawn, and the volume distribution is an average particle diameter which can be measured using, for example, a laser diffraction/scattering type particle size distribution measurement device. In addition, among the raw materials exemplified above, it is preferable that the solid raw material has an average particle diameter similar to that of the lithium sulfide particles described above. That is, it is preferable that the average particle diameter of the lithium sulfide particles is within the same range as that of the lithium sulfide particles described above.

(Regarding the blending ratio of raw materials)

In the production method of the present embodiment, the amount of elemental sulfur used is not particularly limited, and may be determined depending on the sulfide solid electrolyte to be obtained, the type and amount of the raw material-containing substance used.

For example, it can be determined according to the type of the solvent used, and can be classified by the amount of elemental sulfur used relative to 1.0 mole of lithium sulfide. When an organic solvent, which is an ether solvent and an alcohol solvent, is used and the content of the organic solvent is 60% by volume or more based on the total volume of the solvent, the amount of elemental sulfur used is preferably more than 1.0 mole or 1.0 mole or less, and more preferably 1.0 mole or less, based on 1.0 mole of lithium sulfide.

In addition, when the solvent is an organic solvent, which is an ether solvent and an alcohol solvent, it is preferable that the amount of elemental sulfur used is more than 1.0 mole or 1.0 mole or less, based on 1.0 mole of lithium sulfide.

On the other hand, when the amount of elemental sulfur used based on 1.0 mole of lithium sulfide is more than 1.0 mole, it is only necessary to use an organic solvent of an ether solvent and an alcohol solvent as the solvent, and to use the organic solvent in an amount of 60% by volume or more based on the total amount of the solvent. The higher the content of the organic solvent of the ether solvent and the alcohol solvent, the more preferable, and it is more preferable that the organic solvent is an ether solvent and an alcohol solvent. The content of the organic solvent will be described later in detail.

In addition, when the amount of elemental sulfur used based on 1.0 mole of lithium sulfide is 1.0 mole or less, it is only necessary to use an organic solvent of an ether solvent and an alcohol solvent, as the solvent, and to use the organic solvent in an amount of 60% by volume or more based on the total amount of the solvent. In addition to the ether solvent and the alcohol solvent, other solvents to be described later may be contained or not. The content of the organic solvent will be described later in detail.

When the amount of elemental sulfur used is more than 1.0 mole based on 1.0 mole of lithium sulfide, it is preferably 1.1 moles or more, more preferably 1.3 moles or more, and even more preferably 1.4 moles or more. Although the upper limit is not particularly limited, it is sufficient to set the upper limit to about 4.0 moles or less, preferably 3.0 moles or less, more preferably 2.5 moles or less, and even more preferably 2.2 moles or less. In addition, when a sulfide solid electrolyte having a thio-LISICON Region II type crystal structure is to be obtained, the upper limit is preferably 1.9 moles or less, and more preferably 1.7 moles or less, in addition to the above upper limit. When elemental sulfur is used in excess, when the amount used is within the above range, a sulfide solid electrolyte with improved ionic conductivity can be produced more efficiently.

Further, in this case, the amount of elemental sulfur used is preferably 140% or more, and more preferably 150% or more, based on the amount of sulfur atoms required to form the composition of the sulfide solid electrolyte to be obtained by the production method of the present embodiment. Further, although the upper limit is not particularly limited, from the viewpoint of obtaining a sulfide solid electrolyte more efficiently, it is sufficient to set the upper limit to about 300% or less, preferably 280% or less, more preferably 250% or less, and even more preferably 200% or less.

When the amount of elemental sulfur used is 1.0 mole or less based on 1.0 mole of lithium sulfide, the upper limit is preferably 1.0 mole or less, and the lower limit is preferably 0.2 moles or more, more preferably 0.3 moles or more, and even more preferably 0.45 moles or more. When the amount of elemental sulfur used is within the above range, a sulfide solid electrolyte with improved ionic conductivity can be produced more efficiently.

Further, in this case, the amount of elemental sulfur used is preferably 105% or more, more preferably 110% or more, and even more preferably 115% or more, based on the amount of sulfur atoms required to form the composition of the sulfide solid electrolyte to be obtained by the production method of the present embodiment. In addition, although the upper limit is not particularly limited, from the viewpoint of obtaining a sulfide solid electrolyte more efficiently, it is sufficient to set the upper limit to less than 140%.

When using lithium sulfide, elemental sulfur, diphosphorus pentasulfide and lithium halide as raw materials, the ratio of lithium sulfide relative to the total of lithium sulfide and diphosphorus pentasulfide is preferably 65 to 85% by mole, more preferably 70 to 82% by mole, and even more preferably 74 to 80% by mole, from the viewpoint of obtaining higher chemical stability and higher ionic conductivity.

When using lithium sulfide, elemental sulfur, diphosphorus pentasulfide, lithium halide, and other raw materials used as necessary, the content of lithium sulfide and diphosphorus pentasulfide relative to the total of these is preferably 50 to 99% by mole, more preferably 55 to 90% by mole, and even more preferably 60 to 85% by mole.

When using lithium bromide and lithium iodide in combination as lithium halides, the ratio of lithium bromide relative to the total of lithium bromide and lithium iodide is preferably 1 to 99% by mole, more preferably 20 to 80% by mole, even more preferably 35 to 80% by mole, particularly preferably 45 to 70% by mole, from the viewpoint of improving ionic conductivity.

Furthermore, when using lithium bromide and lithium chloride in combination as lithium halides, the ratio of lithium bromide relative to the total of lithium bromide and lithium chloride is preferably 1 to 99% by mole, more preferably 15 to 75% by mole, even more preferably 25 to 60% by mole, and particularly preferably 35 to 45% by mole, from the viewpoint of improving ionic conductivity.

When using a halogen simple substance as the raw material, and when using lithium sulfide, elemental sulfur, or diphosphorus pentasulfide, the ratio of the number of moles of lithium sulfides excluding the number of moles of halogen simple substances and the same number of moles of lithium sulfides relative to the total number of moles of lithium sulfides excluding the number of moles of halogen simple substances and the same number of moles of lithium sulfides and diphosphorus pentasulfides, is preferably within the range of 60 to 90%, more preferably within the range of 65 to 85%, even more preferably within the range of 68 to 82%, further more preferably within the range of 72 to 78%, and particularly preferably within the range of 73 to 77%. This is because higher ionic conductivity can be obtained with these ratios.

Further, from the same viewpoint, when using lithium sulfide, elemental sulfur, diphosphorus pentasulfide, and a halogen simple substance, the content of the halogen simple substance relative to the total amount of lithium sulfide, diphosphorus pentasulfide, and halogen simple substance is preferably 1 to 50 % by mole, more preferably 2 to 40% by mole, even more preferably 3 to 25% by mole, and further preferably 3 to 15% by mole.

When using lithium sulfide, elemental sulfur, diphosphorus pentasulfide, halogen simple substance, and lithium halide, the content of halogen simple substance ($\alpha$% by mole) and the content of lithium halide ($\beta$% by mole) relative to the total amount of lithium sulfide, diphosphorus pentasulfide, halogen simple substance, and lithium halide, preferably satisfy the following formula (2), more preferably satisfy the following formula (3), even more preferably satisfy the following formula (4), and further more preferably satisfy the following formula (5).

$$2 \leq 2\alpha + \beta \leq 100 \ldots (2)$$

$$4 \leq 2\alpha + \beta \leq 80 \ldots (3)$$

$$6 \leq 2\alpha + \beta \leq 50 \ldots (4)$$

$$6 \leq 2\alpha + \beta \leq 30 \ldots (5)$$

When two types of halogens are used as single substances, and the number of moles of halogen atoms in one substance is A1 while the number of moles of halogen atoms in the other substance is A2, A1 : A2 is preferably 1 : 99 to 99 : 1, more preferably 10 : 90 to 90 : 10, even more preferably 20 : 80 to 80 : 20, and further more preferably 30 : 70 to 70 : 30.

When two types of halogen simple substances are used and the two types of halogen simple substances are bromine and iodine, in the case where the number of moles of bromine is A1 and the number of moles of iodine is A2, A1 : A2 is preferably 1 : 99 to 99 : 1, more preferably 20 : 80 to 80 : 20, even more preferably 35 : 65 to 80 : 20, and further more preferably 45 : 55 to 70 : 30.

Further, when the two types of halogen simple substances are bromine and chlorine, and the number of moles of bromine is B1 while the number of moles of chlorine is B2, B1 : B2 is preferably 1 : 99 to 99 : 1, more preferably 15 : 85 to 75 : 25, even more preferably 25 : 75 to 60 : 40, and further more preferably 35 : 45 to 65 : 55.

(Solvent)

The solvent used when mixing the raw materials includes 60% by volume or more of an organic solvent, which is an ether solvent and an alcohol solvent, based on the total amount of the solvent.

The content of the organic solvent, which is an ether solvent and an alcohol solvent, is preferably 70% by volume or more, more preferably 80% by volume or more, even more preferably 90% by volume or more, and still more preferably 95% by volume or more. Further, 100% by volume is particularly preferable, that is, it is preferable that the solvent used in mixing the raw materials is an organic solvent, which is an ether solvent and an alcohol solvent. When the content of the organic solvent is within the above range, the generation of sulfur active species such as sulfur radicals suitable for the formation of an electrolyte precursor is promoted in a well-balanced manner, the formation of the electrolyte precursor (polysulfide) is further promoted, and it becomes possible to more efficiently produce a sulfide solid electrolyte with improved ionic conductivity.

It is sufficient that the above-mentioned solvent is an ether solvent and an alcohol solvent in combination, and the content of these organic solvents is 60% by volume or more based on the total amount of the solvent, and other solvents to be described later may be contained. As mentioned above, it is also preferable that these organic solvents are 100% by volume, that is, the entire amount of the solvent is an organic solvent, which is an ether solvent and an alcohol solvent. Here, the embodiment in which these organic solvents are 100% by volume includes not only the case where the solvent is literally an ether solvent and an alcohol solvent, i.e., the case where only organic solvents of an ether solvent and an alcohol solvent are used as the solvent, but also the case where other solvents are inevitably mixed in. In this case, the content of the other solvent is 3% by volume or less, further 2% by volume or less, 1% by volume or less, 0.5% by volume or less, or 0.1% by volume or less.

(Alcohol Solvent)

Examples of the alcohol solvent include aliphatic alcohols, alicyclic alcohols, heterocyclic alcohols, and aromatic alcohols, and considering ease of availability and cost, aliphatic alcohols, alicyclic alcohols, and aromatic alcohols are preferred, with aliphatic alcohols being more preferred.

Representative examples of aliphatic alcohols include saturated or unsaturated monohydric aliphatic alcohols such as methanol, ethanol, various propanols, allyl alcohol, various butanols, and various buteneols; and saturated or unsaturated polyhydric aliphatic alcohols such as various propanediols, various propenediols, various butanediols, various butenediols, various hexanediols, various hexenediols, various butanetriols, erythritol, pentaerythritol, and dipentaerythritol.

In the present description, "various" means that all possible isomers are included, for example, for various butanols, 1-butanol, 2-butanol, 2-methyl-1-propanol, and 1,1-dimethylethanol are all included. In addition, even if "various" is not used, compounds described in a format in which the substitution position number is not specified include all possible isomers.

The aliphatic hydrocarbon group in the aliphatic alcohol may be linear or branched, and may be saturated or unsaturated.

The carbon number of the aliphatic alcohol is preferably 1 or more, more preferably 2 or more, and the upper limit is preferably 12 or less, more preferably 8 or less, and even more preferably 4 or less.

The aliphatic alcohol may be partially substituted, and preferred examples thereof include alkanolamines in which a portion of ethanolamine, propanolamine, dimethylethanolamine, etc. is substituted with an amino group, and alcohols in which a portion of fluoroalcohol, etc. is substituted with a halogen atom.

Representative preferred examples of alicyclic alcohols include monohydric or polyhydric saturated or unsaturated monocyclic alicyclic alcohols such as cyclopropanol, methylcyclopropanol, cyclopropanemethanol, cyclobutanol, cyclobutenol, cyclopentanol, cyclopentenol, cyclohexanol, methylcyclohexanol, cyclohexenol, cyclohexanediol, and cyclohexanetriol; and monohydric or polyhydric polycyclic alicyclic alcohols such as cyclopentylcyclopentanol, cyclohexylcyclohexanol, cyclohexylphenylcyclohexanol, and bicyclohexanol.

The carbon number of the alicyclic alcohol is preferably 3 or more, and the upper limit is preferably 12 or less, more preferably 10 or less, and even more preferably 8 or less.

The alicyclic alcohol may be partially substituted, and preferred examples thereof include those partially substituted with saturated or unsaturated hydrocarbon groups (including linear and branched groups) such as alkyl groups and alkenyl groups, for example, those partially substituted with amino groups such as aminomethylcyclopropanol, and those partially substituted with halogen atoms. In addition, the alicyclic alcohol may be substituted with a substituent such as an amide group and a cyano group.

Representative preferred examples of the heterocyclic alcohol include monocyclic heterocyclic alcohols such as oxetaneol, oxetanemethanol, furfuryl alcohol, tetrahydrofurfuryl alcohol, tetrahydropyranmethanol, morpholineethanol, and pyridinemethanol; and polycyclic condensed heterocyclic alcohols such as benzofuranmethanol and dihydrobenzofuranmethanol.

The carbon number of the heterocyclic alcohol is preferably 3 or more, and the upper limit is preferably 24 or less, more preferably 18 or less, and even more preferably 12 or less.

The heterocyclic alcohol may be partially substituted in the same manner as the alicyclic alcohol described above.

Representative preferred examples of the aromatic alcohol include monocyclic aromatic alcohols such as benzyl alcohol, salicyl alcohol, benzenedimethanol, methoxyphenylmethanol, trimethoxyphenylmethanol, and phenethyl alcohol; polycyclic aromatic alcohols such as diphenylmethanol and triphenylmethanol; and condensed polycyclic aromatic alcohols such as naphthalenemethanol, anthracenemethanol, benzofuranmethanol, and dihydrobenzofuranmethanol.

The carbon number of the aromatic alcohol is preferably 7 or more, and the upper limit is preferably 24 or less, more preferably 20 or less, and even more preferably 16 or less.

The aromatic alcohol may be partially substituted in the same manner as the alicyclic alcohol described above.

The above examples are merely representative of preferred alcohol solvents, and the solvents that can be used in the production method of the present embodiment are not limited to the above examples.

The alcohol solvent may be any of a primary alcohol, a secondary alcohol, and a tertiary alcohol, and is preferably a primary alcohol. In addition, the alcohol solvent may be a monohydric alcohol having one hydroxy group or a polyhydric alcohol having two or more hydroxy groups, and is preferably a monohydric alcohol.

(Ether Solvent)

Examples of the ether solvent include aliphatic ethers, alicyclic ethers, heterocyclic ethers, and aromatic ethers. Considering ease of availability and cost, aliphatic ethers, alicyclic ethers, and aromatic ethers are preferred, aliphatic ethers and alicyclic ethers are more preferred, and alicyclic ethers are even more preferred.

Representative preferred examples of the aliphatic ether include, monoethers such as dimethyl ether, diethyl ether, diisopropyl ether, dibutyl ether, and tert-butyl methyl ether; diethers such as dimethoxymethane, dimethoxyethane, diethoxymethane, diethoxyethane; polyethers having three or more ether groups such as diethylene glycol dimethyl ether (diglyme) and triethylene oxide glycol dimethyl ether (triglyme); and ethers containing hydroxy groups such as diethylene glycol and triethylene glycol.

The carbon number of the aliphatic ether is preferably 2 or more, more preferably 3 or more, even more preferably 4 or more, and the upper limit is preferably 10 or less, more preferably 8 or less, and even more preferably 6 or less.

In addition, the aliphatic alcohol may be linear or branched.

Representative preferred examples of alicyclic ethers include monocyclic alicyclic ethers such as ethylene oxide, propylene oxide, furan, tetrahydrofuran, pyran, tetrahydropyran, dimethoxytetrahydrofuran, cyclopentyl methyl ether, dioxane, dioxene, dioxin, and dioxolane; and polycyclic alicyclic ethers such as dicyclopentyl ether and dicyclohexyl ether.

Representative preferred examples of heterocyclic ethers include monocyclic heterocyclic ethers such as morpholine and hydroxymethyldimethoxypyridine; and polycyclic condensed heterocyclic ethers such as benzofuran, benzopyran, dibenzofuran, and methoxyindole.

The carbon number of the alicyclic ether and the heterocyclic ether is preferably 3 or more, and the upper limit is preferably 16 or less, more preferably 14 or less, and even more preferably 10 or less.

Representative preferred examples of aromatic ethers include monocyclic aromatic ethers such as methyl phenyl ether (anisole) and ethyl phenyl ether; polycyclic aromatic ethers such as dibenzyl ether, diphenyl ether, and benzyl phenyl ether; and condensed polycyclic aromatic ethers such as benzyl naphthyl ether and bisnaphthyl ether.

The carbon number of the aromatic ether is preferably 7 or more, more preferably 8 or more, and the upper limit is preferably 16 or less, more preferably 14 or less, and even more preferably 12 or less.

The ether compound used in the present embodiment may be substituted with a substituent, such as a linear or branched hydrocarbon group such as an alkyl group and an alkenyl group, an alkoxyl group (the alkyl group may be linear or branched), a hydroxy group, an amino group, an amide group, and a cyano group, or a halogen atom.

Among the above ether compounds, alicyclic ethers are preferred, monocyclic alicyclic ethers are more preferred, and tetrahydrofuran is particularly more preferred, from the viewpoint of obtaining higher ionic conductivity.

(Other Solvents Having Heteroatoms)

In the production method of the present embodiment, a solvent containing a heteroatom can be used as a solvent other than the organic solvent, which is an ether solvent and an alcohol solvent, containing an oxygen atom. Preferred examples of heteroatoms contained in the solvent include oxygen atoms, nitrogen atoms, sulfur atoms, chlorine atoms, and phosphorus atoms, with oxygen atoms and nitrogen atoms being preferable. The solvent containing a heteroatom may contain one kind of these heteroatoms or a plurality of kinds of these heteroatoms.

Examples of such solvents containing heteroatoms include solvents containing oxygen atoms, such as ester solvents, aldehyde solvents, and ketone solvents; solvents containing nitrogen atoms, such as amine solvents and nitrile solvents; and solvents containing oxygen atoms and nitrogen atoms, such as amide solvents. Of the above, nitrile solvents are preferred.

(Nitrile Solvent)

Examples of nitrile solvents include aliphatic nitriles, alicyclic nitriles, heterocyclic nitriles, and aromatic nitriles, and in consideration of ease of availability and cost, aliphatic nitriles are preferred.

Representative preferred examples of the aliphatic nitrile include saturated or unsaturated aliphatic nitriles having one nitrile group, such as acetonitrile, acrylonitrile, methoxyacetonitrile, propionitrile, methoxypropionitrile, and butyronitrile; and saturated or unsaturated aliphatic nitriles having two or more nitrile groups, such as propanedinitrile, propanetricarbonitrile, butanedinitrile, butenedinitrile, butanetricarbonitrile, pentanedinitrile, pentanetricarbonitrile, hexanedinitrile, hexenedinitrile, hexanetricarbonitrile, and methylenepentanedinitrile.

The carbon number of the aliphatic nitrile is preferably 2 or more, and the upper limit is preferably 10 or less, more preferably 8 or less, and even more preferably 4 or less. Further, the carbon number of the aliphatic hydrocarbon group in the aliphatic nitrile is preferably 1 or more, and the upper limit is preferably 8 or less, more preferably 6 or less, even more preferably 2 or less.

In addition, the aliphatic hydrocarbon group in the aliphatic nitrile may be linear or branched.

The nitrile solvent may be substituted with a substituent, such as a linear or branched hydrocarbon group such as an alkyl group and an alkenyl group, an alkoxyl group (the alkyl group may be linear or branched), a hydroxy group, an amino group, an amide group, and a cyano group, or a halogen atom.

In addition, with regard to the amine solvents and amide solvents exemplified, preferred examples include heterocyclic aromatic amine solvents such as pyridine; and amide solvents such as dimethylformamide, dimethylacetamide, hexamethylphosphoramide, and N-methylpyrrolidone.

(Other Solvents)

In the production method of the present embodiment, as the solvent other than the organic solvent, which is an ether solvent and an alcohol solvent, a hydrocarbon solvent can be used in addition to the other solvent having a heteroatom described above. As the hydrocarbon solvent, for example, aliphatic hydrocarbon solvents such as hexane, pentane, 2-ethylhexane, heptane, octane, decane, undecane, dodecane, and tridecane; alicyclic hydrocarbon solvents such as cyclohexane and methylcyclohexane; and aromatic hydrocarbon solvents such as benzene, toluene, xylene, mesitylene, ethylbenzene, and tert-butylbenzene, may be used.

In this case, the smaller the amount of the other solvent used, the better. For example, it is preferably 50.0 parts by volume or less, more preferably 30.0 parts by volume or less, and even more preferably 15.0 parts by volume or less, relative to 100.0 parts by volume of the above-mentioned organic solvent (i.e., the organic solvent, which is an ether solvent and an alcohol solvent). In addition, it is of course preferable to use only the organic solvent described above without using other solvents, and in this case, as already mentioned, it is inevitable that a solvent other than the above organic solvent may be included.

(Amount of Solvent Used)

When an alcohol solvent is used, the amount of the alcohol solvent used is, relative to 1.0 mole of lithium sulfide used as a raw material, preferably 0.030 moles or more, more preferably 0.035 moles or more, even more preferably 0.040 moles or more, and still more preferably 0.045 moles or more. Although the upper limit is not particularly limited, considering the efficiency, it is sufficient to be 5.0 moles or less, and preferably 3.5 moles or less. In addition, when a sulfide solid electrolyte having a thio-LISICON Region II type crystal structure is to be obtained, the upper limit is preferably 3.0 moles or less, more preferably 2.5 moles or less, even more preferably 1.0 mole or less, still more preferably 0.7 moles or less, and particularly preferably 0.5 moles or less, in addition to the above upper limit. When the amount of the alcohol solvent used is within the above range, the generation of sulfur active species such as sulfur radicals suitable for the formation of an electrolyte precursor is promoted in a well-balanced manner, the formation of the electrolyte precursor (polysulfide) is further promoted, and it becomes possible to more efficiently produce a sulfide solid electrolyte with improved ionic conductivity.

When an ether solvent is used, the content of the ether solvent based on the total amount of the solvent is preferably 50.0% by volume or more, more preferably 75.0% by volume or more, even more preferably 90.0% by volume or more, still more preferably 95.0% by volume or more, and particularly preferably 98.0% by volume or more. In addition, when a sulfide solid electrolyte having a thio-LISICON Region II type crystal structure is to be obtained, the lower limit is preferably 99.0% by volume or more, or 99.5% by volume or more, in addition to the above lower limit. When the amount of the ether solvent used is within the above range, the generation of sulfur active species such as sulfur radicals suitable for the formation of an electrolyte precursor is promoted in a well-balanced manner, the formation of the electrolyte precursor (polysulfide) is further promoted, and it becomes possible to more efficiently produce a sulfide solid electrolyte with improved ionic conductivity.

The ratio of the amount of the ether solvent used to the amount of the alcohol solvent used (ether solvent/alcohol solvent (volume ratio)) is sufficient to be 30 or more, and preferably 50 or more. In addition, when a sulfide solid electrolyte having a thio-LISICON Region II type crystal structure is to be obtained, the lower limit is preferably 150 or more, more preferably 200 or more, and even more preferably 250 or more, in addition to the above lower limit. Further, the upper limit is preferably 2500 or less, more preferably 2300 or less, and still more preferably 1100 or less. When the ratio is within the above range, the generation of sulfur active species such as sulfur radicals suitable for the formation of an electrolyte precursor is promoted in a well-balanced manner, the formation of the electrolyte precursor (polysulfide) is further promoted, and it becomes possible to more efficiently produce a sulfide solid electrolyte with improved ionic conductivity.

Further, the amount of the solvent used is, based on 100 g of raw material-containing substance, preferably 500 mL or more, more preferably 1000 mL or more, and even more preferably 1500 mL or more, and the upper limit is usually 5000 mL or less. In addition, when a sulfide solid electrolyte having a thio-LISICON Region II type crystal structure is to be obtained, the upper limit is preferably 4500 mL or less, and more preferably 4000 mL or less, in addition to the above upper limit. When the amount of the solvent used is within the above range, the generation of sulfur active species such as sulfur radicals suitable for the formation of an electrolyte precursor is promoted in a well-balanced manner, the formation of the electrolyte precursor (polysulfide) is further promoted, and it becomes possible to more efficiently produce a sulfide solid electrolyte with improved ionic conductivity.

(Mixing)

In the production method of the present embodiment, the raw material-containing substance containing raw materials is mixed in a solvent. By mixing the raw material-containing substance in the solvent, the generation of sulfur active species such as sulfur radicals is promoted in a well-balanced manner, the formation of an electrolyte precursor is promoted, and thus a sulfide solid electrolyte with few impurities and high ionic conductivity can be efficiently obtained.

There is no particular restriction on the method of mixing the raw material-containing substance in the solvent, and it is only necessary to charge and mix the solvent and the raw material-containing substance in a device capable of mixing a raw material-containing substance in a solvent. For example, it is preferable to gradually add the raw material-containing substance after supplying the solvent into a tank and operating stirring blades. In addition, it is also preferable to gradually add the solvent after supplying the raw material-containing substance into the tank and operating the stirring blades. Since a good mixed state of the raw material-containing substance is obtained, the dispersion of the raw materials is improved, and the generation of the sulfur active species such as sulfur radicals suitable for forming an electrolyte precursor is promoted in a well-balanced manner, the formation of the electrolyte precursor (polysulfide) is promoted.

However, when using a halogen simple substance as a raw material, the raw material may not be solid, specifically, at room temperature and normal pressure, fluorine and chlorine are gases, and bromine is liquid. In such cases, for example, when the raw material is a liquid, it may be supplied with the solvent into the tank separately from other solid raw materials, and when the raw material is a gas, it may be supplied by blowing into the solvent to which the solid raw material has been added.

There is no particular restriction on the order in which the raw materials of the raw material-containing substance are charged and mixed. Considering the work efficiency, it is preferable use collective mixing, that is, to charge and mix all the raw materials at the same time.

In addition, in order to improve the solubility of the raw materials, suppress the generation of impurities, and more efficiently obtain a sulfide solid electrolyte having high ionic conductivity, it is preferable to use split mixing, that is, to divide the raw materials into two raw material groups, raw material groups 1 and 2, and mixing the raw material group 1 and then mixing the raw material group 2.

In the case of performing split mixing, it is preferable that the raw material group 1 contains elemental sulfur. The generation of sulfur active species such as sulfur radicals suitable for the formation of an electrolyte precursor is promoted in a well-balanced manner, a sulfide solid electrolyte with high ionic conductivity can be obtained more efficiently.

From the same viewpoint, a combination of the raw material group 1 including a raw material containing at least one atom selected from a lithium atom, a phosphorus atom, and a sulfur atom, elemental sulfur, and lithium sulfide, and the raw material group 2 including a raw material containing a halogen atom, is preferred. This is because the raw material group 1 contains elemental sulfur and lithium sulfide, and the reaction therebetween promotes in a well-balanced manner the formation of sulfur active species such as sulfur radicals suitable for the formation of an electrolyte precursor formed with other raw materials via lithium polysulfides.

In the production method of the present embodiment, the order in which the raw materials are charged and mixed may be selected depending on whether the work efficiency is regarded as important or the ionic conductivity of the sulfide solid electrolyte is regarded as important.

Also, as described above, in the production method of the present embodiment, $Li_3PS_4$ containing the $PS_4$ structure can be prepared by producing it first, etc., and used as a raw material contained in the raw material-containing substance. $Li_3PS_4$ can be produced by blending lithium sulfide and diphosphorus pentasulfide in a molar ratio of 75:25, for example. In the production method of the present embodiment, when lithium sulfide and diphosphorus pentasulfide are used as raw materials, it is also possible to mix, as the raw material group 1, a raw material group containing lithium sulfide and diphosphorus pentasulfide in a predetermined molar ratio such as 75:25 and containing elemental sulfur in a solvent, and then to add and mix, as the raw material group 2, a raw material group including a raw material containing a halogen atom such as lithium halide, and other remaining raw materials required for the production of the desired sulfide solid electrolyte, such as the remaining of lithium sulfide. By forming an electrolyte precursor (polysulfide) containing the basic structure of $Li_3PS_4$ in advance, a sulfide solid electrolyte can be obtained more efficiently.

Here, the predetermined molar ratio of lithium sulfide to diphosphorus pentasulfide is preferably 55 to 85 : 15 to 45, more preferably 60 to 80 : 20 to 40, and even more preferably 65 to 75 : 25 to 35.

The production method of the present embodiment is characterized in that the raw material-containing substance is mixed in the solvent. In other words, since it is sufficient to mix the raw material-containing substance and does not require pulverization, it can also be produced by a method which does not use equipment that is generally called as a grinder such as media type grinders including ball mill and a bead mill, and used for the purpose of pulverizing solid electrolyte raw materials. In the production method of the present embodiment, the raw material-containing substance is simply mixed in the solvent, and the solvent and the raw materials are mixed to generate polysulfide, which is an electrolyte precursor. When the polysulfide is decomposed by heating or the like, an amorphous sulfide solid electrolyte, and even a crystalline sulfide solid electrolyte, can be formed.

In order to shorten the mixing time for obtaining the electrolyte precursor or to pulverize the raw materials, the mixture of raw materials in the solvent may be pulverized by a pulverizer; however, as mentioned above, it is preferable not to use a pulverizer.

Examples of the devices for mixing the raw material-containing substance in the solvent include a mechanical stirring type mixer equipped with stirring blades in a tank. Examples of the mechanical stirring type mixer include high-speed stirring type mixers and double-arm mixers, and high-speed stirring type mixers are preferably used from the viewpoint of increasing the uniformity of the raw material in the mixture of the raw material-containing substance and obtaining higher ionic conductivity. Further, examples of the high-speed stirring type mixer include a vertical axis rotation type mixer and a horizontal axis rotation type mixer, and either type of mixer may be used.

Examples of the shape of the stirring blade used in the mechanical stirring type mixer include an anchor type, a blade type, an arm type, a ribbon type, a multi-stage blade type, a double-arm type, a shovel type, a twin-screw blade type, a flat blade type, and a C-blade type. From the viewpoint of improving the uniformity of the solid electrolyte raw material and obtaining higher ionic conductivity, a shovel type, a flat blade type, a C-blade type, etc. are preferable. Further, in a mechanical stirring type mixer, it is preferable to install a circulation line for discharging an object to be stirred outside the mixer and returning it to the inside of the mixer. By doing so, raw materials with heavy specific gravity such as lithium halide are stirred without settling or stagnation, and it becomes possible to mix more uniformly.

The location of the circulation line to be installed is not particularly limited, however it is preferably installed at a location such that the object to be stirred is discharged from the bottom of the mixer and returned to the top of the mixer. This makes it easier to uniformly stir the solid electrolyte raw material, which easily settles, on the convection caused by circulation. Furthermore, it is preferable that the return port is located below the surface of the liquid to be stirred. By doing so, it is possible to suppress the liquid to be stirred from splashing and adhering to the wall surface inside the mixer.

Although the upper limit of the mixing time when mixing the raw material-containing substance in the solvent is not particularly limited, considering the efficiency, it is preferably 240 minute or less, more preferably 60 minutes or less, even more preferably 30 minutes or less, and still more preferably 15 minutes or less, and the lower limit thereof is usually 0.1 minutes or more, preferably 1 minutes or more, and more preferably 3 minutes or more.

In addition, the temperature conditions for mixing the raw material-containing substance in the solvent are not particularly limited, and are, for example, -30 to 100°C, preferably -10 to 50°C, and more preferably around room temperature (23°C) (for example, approximately room temperature $\pm$ 5°C).

[Heating]

The production method of the present embodiment includes heating after mixing the raw material-containing substance. By heating, the polysulfide formed can be decomposed, the solvent can be removed, the elemental sulfur formed due to the decomposition of the polysulfide can be removed, and crystallization can be performed. In addition, although the elemental sulfur can be removed by heating, for the removal of the elemental sulfur, different methods such as solvent washing and hydrodesulfurization may be used.

The heating temperature is not particularly limited as long as it is at room temperature or higher, and although room temperature is variable and cannot be generalized, it is usually preferably 20°C or higher.

In addition, although the upper and lower limits of the heating temperature cannot be generalized because they vary depending on the type of the sulfide solid electrolyte to be obtained, the type and amount of the solvent used in mixing, etc., the heating temperature is preferably room temperature (20°C) or higher, and the upper limit is preferably 500°C or lower. When the heating temperature is within the above range, the decomposition of the polysulfide, the removal of the solvent, and the removal of elemental sulfur can be performed more efficiently, and crystallization can be performed. In addition, when a sulfide solid electrolyte having an argyrodite type crystal structure is to be obtained, the upper limit is preferably temperature of the above-mentioned upper limit, and when a sulfide solid electrolyte having a thio-LISICON Region II type crystal structure is to be obtained, the upper limit is more preferably 300°C or lower, in addition to the above-mentioned upper limit.

In addition, it is preferable to perform the heating in multiple stages. For example, it is preferable to perform heating (first heating) mainly for decomposing the polysulfide produced, removing the solvent, and removing elemental sulfur, and then perform heating (second heating) for crystallization. More specifically, it is preferable to perform the first heating at a heating temperature of 20°C or higher and lower than 150°C, and the second heating at a heating temperature of 150°C or higher and 500°C or lower.

The heating temperature in the first heating may be 20°C or higher and lower than 150°C. For example, heating at a lower temperature may be followed by heating at a higher temperature, i.e., the first heating may be performed by further heating in multiple stages.

Typically, the removal of the solvent begins at 20°C or higher, the decomposition of the polysulfide begins at 60°C or higher, and the removal of sulfur begins at 100°C or higher. By carrying out multi-stage heating at heating temperatures according to these purposes, each purpose can be achieved more efficiently, and thus it becomes easier to obtain a sulfide solid electrolyte with improved ionic conductivity. In particular, by ensuring the removal of elemental sulfur, the generation of impurities due to remaining elemental sulfur can be further suppressed, making it easier to obtain a sulfide solid electrolyte with improved ionic conductivity.

For example, when heating at a lower temperature (first heating-1), the heating temperature is preferably 20°C or higher, with an upper limit of preferably lower than 60°C, and more preferably 50°C or lower. By setting the heating temperature in the temperature range, it becomes possible to remove the solvent.

Subsequently, when heating at a higher temperature (first heating-2), the heating temperature is preferably 60°C or higher, more preferably 65°C or higher, even more preferably 75°C or higher, still more preferably 95°C or higher, and particularly preferably 110°C or higher, and the upper limit is lower than 150°C, more preferably 145°C or lower, even more preferably 135°C or lower, and still more preferably 130°C or lower. By setting the heating temperature in the temperature range, it becomes possible to mainly perform the decomposition of the polysulfide and the removal of sulfur.

As described above, the first heating can be performed to remove the solvent, decompose the polysulfide, or remove sulfur depending on the heating temperature, and thus various modes can be taken by adjusting the heating temperature. For example, when the heating temperature of the first heating is 60°C or higher (lower than 100°C), it is possible to remove the solvent and even decompose the polysulfide, and thus this is called first heating-1, and by heating at 100°C or higher (lower than 150°C) as first heating-2, it is possible to remove the sulfur. In this case, the first heating-2 is not performed, and as described above, the sulfur can be removed by a method other than heating, such as solvent washing and hydrodesulfurization, and then the second heating can be performed. Methods for removing sulfur, such as solvent washing and hydrodesulfurization, will be described later.

Also, for example, when the heating temperature of the first heating is 20°C or higher (lower than 60°C), the solvent can be removed, so this is called first heating-1, and when heating at 60°C or higher (lower than 100°C) as first heating-2, the polysulfide can be decomposed, and then heating is performed at 100°C or higher (lower than 150°C) as first heating-3 to remove the sulfur. In this way, it is also possible to perform three-stage heating. In this case, instead of the first heating-3, sulfur can be removed by a method other than heating as described above, and by setting the heating temperature of the first heating-2 to 100°C or higher (lower than 150°C), decomposition of the polysulfide and removal of sulfur can be performed simultaneously.

As described above, the first heating is performed by multi-stage heating; however, when the heating temperature of the first heating is, for example, 100°C or higher, the solvent can be removed, the polysulfide can be decomposed, and sulfur can be removed, and thus multi-stage heating is not necessary.

The heating time of the first heating is not particularly limited as long as it is at least long enough to remove the solvent; however, for example, it is preferably 10 minute or more, more preferably 30 minutes or more, even more preferably 45 minutes or more, and further more preferably 1 hour or more. Further, the upper limit of the heating time is not particularly limited, however it is preferably 24 hours or less, more preferably 10 hours or less, even more preferably 5 hours or less, and further more preferably 3 hours or less.

The pressure conditions for the first heating are preferably normal pressure or reduced pressure. In the case of reduced pressure, specifically, the pressure is preferably 85 kPa or less, more preferably 30 kPa or less, and even more preferably 10 kPa or less. The lower limit is preferably a vacuum (0 kPa), and considering the ease of adjusting the pressure, it is 5 kPa or more.

Moreover, heating is preferably performed in an inert gas atmosphere (for example, a nitrogen atmosphere or an argon atmosphere) or a reduced pressure atmosphere (in particular, a vacuum). For example, an inert gas atmosphere containing a certain concentration of hydrogen may be used. This is because deterioration (for example, oxidation) of the sulfide solid electrolyte can be prevented.

Although the heating temperature in the second heating may vary depending on the sulfide solid electrolyte to be produced and cannot be generalized, considering the relationship with the first heating, the heating temperature may be 150°C or higher and 500°C or lower, and is preferably 160°C or higher. In addition, when a sulfide solid electrolyte having an argyrodite type crystal structure is to be obtained, the lower limit is preferably 200°C or higher, and more preferably 240°C or higher, in addition to the above lower limit. Further, the upper limit is preferably 480°C or lower, more preferably 460°C or lower, and still more preferably 440°C or lower. In addition, when a sulfide solid electrolyte having a thio-LISICON Region II type crystal structure is to be obtained, the upper limit is preferably 300°C or lower, more preferably 275°C or lower, and even more preferably 230°C or lower, in addition to the above upper limit.

The second heating may be performed in multiple stages, similar to the first heating. By carrying out multi-stage heating as the second heating, more reliable crystallization can be achieved.

When multi-stage heating is performed, for example, the heating temperature when heating at a lower heating temperature (second heating-1) may be set to150°C or higher and lower than 350°C, and the heating temperature when heating at a higher heating temperature (second heating-2) may be set to 350°C or higher and 500°C or lower. The lower limit of the second heating-1 is preferably the lower limit of the temperature of the second heating, more preferably 200°C or higher, and the upper limit is preferably 300°C or lower, more preferably 275°C or lower. In addition, the upper limit of the second heating-2 is preferably the upper limit of the temperature of the second heating, and the lower limit is preferably 370°C or higher, more preferably 390°C or higher, and even more preferably 400°C or higher.

The heating time and pressure conditions in the second heating are the same as those in the first heating. It is also preferable to perform the second heating in an inert gas atmosphere.

The heating method is not particularly limited; however, examples thereof include methods using various heating devices, such as a hot plate, a vacuum heating device, an argon gas atmosphere furnace, a firing furnace, and a vacuum firing furnace. Further, industrially, a horizontal dryer, a horizontal vibrating fluidized dryer, etc. having a heating unit and a feed mechanism may be used, and they may be selected depending on the processing amount to be heated.

(Removal of Sulfur)

In the production method of the present embodiment, sulfur may be removed by a method other than heating as described above. For example, when the first heating is performed at a temperature of lower than 100°C, it is preferable to remove sulfur by a method other than heating. Examples of methods for removing sulfur include solvent washing and hydrodesulfurization.

The solvent washing method is a method of washing the powder that has been subjected to the first heating with a solvent that dissolves sulfur, for example, an aromatic hydrocarbon solvent such as benzene, toluene, and xylene; or a sulfur-containing organic solvent such as carbon disulfide, and removing the sulfur.

The hydrodesulfurization method is a method of mixing the powder that has been subjected to the first heating with a hydrodesulfurization catalyst, and passing hydrogen through the mixture while heating at 300 to 450°C to remove sulfur through a hydrodesulfurization reaction. Here, preferred examples of hydrodesulfurization catalysts include porous catalysts containing nickel, molybdenum, cobalt, tungsten, etc. as an active metal element, such as NiMo catalysts, CoMo catalysts, and NiW catalysts.

(Amorphous Sulfide Solid Electrolyte)

In the production method of the present embodiment, an amorphous sulfide solid electrolyte is produced by mixing the raw material-containing substance described above or by carrying out the first heating for mainly removing the solvent described above.

The amorphous sulfide solid electrolyte produced in the production method of the present embodiment contains lithium atoms, sulfur atoms, phosphorus atoms, and halogen atoms, and representative examples thereof preferably include solid electrolytes composed of lithium sulfide, phosphorus sulfide, and a lithium halide, for example, $Li_2S$-$P_2S_5$-LiI, $Li_2S$-$P_2S_5$-LiCl, $Li_2S$-$P_2S_5$-LiBr, and $Li_2S$-$P_2S_5$-LiI-LiBr; and solid electrolytes containing other atoms such as oxygen atoms and silicon atoms, for example, $Li_2S$-$P_2S_5$-$Li_2O$-LiI and $Li_2S$-$SiS_2$-$P_2S_5$-LiI. From the viewpoint of obtaining higher ionic conductivity, solid electrolytes composed of lithium sulfide, phosphorus sulfide, and a lithium halide, such as $Li_2S$-$P_2S_5$-LiI, $Li_2S$-$P_2S_5$-LiCl, $Li_2S$-$P_2S_5$-LiBr, and $Li_2S$-$P_2S_5$-LiI-LiBr, are preferred.

The types of atoms constituting the amorphous sulfide solid electrolyte can be determined by, for example, an ICP emission spectrophotometer.

When the amorphous sulfide solid electrolyte produced in the production method of the present embodiment has at least $Li_2S$-$P_2S_5$, the molar ratio of $Li_2S$ and $P_2S_5$ is preferably 65 to 85 : 15 to 35 from the viewpoint of obtaining higher ionic conductivity, more preferably 70 to 82 : 18 to 30, and even more preferably 74 to 80 : 20 to 26.

When the amorphous sulfide solid electrolyte produced in the production method of the present embodiment is,

for example, $Li_2S-P_2S_5-LiI-LiBr$, the total content of lithium sulfide and diphosphorus pentasulfide is preferably 60 to 95% by mole, more preferably 65 to 90% by mole, and even more preferably 70 to 85% by mole. Further, the ratio of lithium bromide relative to the total of lithium bromide and lithium iodide is preferably 1 to 99% by mole, more preferably 20 to 90% by mole, even more preferably 40 to 75% by mole, and particularly preferably 45 to 60% by mole.

Moreover, when the amorphous sulfide solid electrolyte produced in the production method of the present embodiment is, for example, $Li_2S-P_2S_5-LiCl-LiBr$, the total content of lithium sulfide and diphosphorus pentasulfide is preferably 45 to 80% by mole, more preferably 50 to 75% by mole, and even more preferably 55 to 70% by mole. In addition, the ratio of lithium bromide relative to the total of lithium bromide and lithium chloride is preferably 1 to 99% by mole, more preferably 15 to 75% by mole, even more preferably 25 to 60% by mole, and particularly preferably 35 to 45% by mole.

The shape of the amorphous sulfide solid electrolyte is not particularly limited, and examples thereof include a particle shape.

The average particle diameter ($D_{50}$) of the particle shaped amorphous sulfide solid electrolyte is, for example, 0.01 μm or more, further 0.03 μm or more, 0.05 μm or more, 0.1 μm or more, and the upper limit is 200.0 μm or less, further 100.0 μm or less, 10.0 μm or less, 1.0 μm or less, and 0.5 μm or less.

(Crystalline Sulfide Solid Electrolyte)

The crystalline sulfide solid electrolyte obtained by the production method of the present embodiment may be a so-called glass ceramic obtained by heating an amorphous sulfide solid electrolyte to a crystallization temperature or higher, and examples of a crystal structure thereof include a $Li_3PS_4$ crystal structure, a $Li_4P_2S_6$ crystal structure, a $Li_7PS_6$ crystal structure, a $Li_7P_3S_{11}$ crystal structure, and a crystal structure having peaks in the vicinity of $2\theta = 20.2°$ and in the vicinity of 23.6° (for example, JP 2013-16423 A).

Examples also include a $Li_{4-x}Ge_{1-x}P_xS_4$ system thio-LISICON Region II type crystal structure (see Kanno et al., Journal of The Electrochemical Society, 148 (7) A742-746 (2001)), and a crystal structure similar to the $Li_{4-x}Ge_{1-x}P_xS_4$ system thio-LISICON Region II type (see Solid State Ionics, 177 (2006), 2721-2725). The crystal structure of the crystalline sulfide solid electrolyte obtained by the production method of the present embodiment is preferably the thio-LISICON Region II type crystal structure among above, from the viewpoint of obtaining higher ionic conductivity. Herein, the term "thio-LISICON Region II type crystal structure" refers to either a $Li_{4-x}Ge_{1-x}P_xS_4$ system thio-LISICON Region II type crystal structure or a crystal structure similar to a $Li_{4-x}Ge_{1-x}P_xS_4$ system thio-LISICON Region II type crystal structure.

The crystalline sulfide solid electrolyte obtained by the production method of the present embodiment may contain the thio-LISICON Region II type crystal structure, or may contain the thio-LISICON Region II type crystal structure as a main crystal; however, from the viewpoint of obtaining higher ionic conductivity, it is preferable that the crystalline sulfide solid electrolyte contains the thio-LISICON Region II type crystal structure as a main crystal. In the description herein, "containing as a main crystal" means that the proportion of the target crystal structure in the crystal structures is 80% or more, and the proportion is preferably 90% or more, and more preferably 95% or more. In addition, from the viewpoint of obtaining higher ionic conductivity, it is preferable that the crystalline sulfide solid electrolyte obtained by the production method of the present embodiment does not contain crystalline $Li_3PS_4$ (β-$Li_3PS_4$).

In the X-ray diffractometry using CuKα line, the diffracted peak of the $Li_3PS_4$ crystal structure appears, for example, in the vicinity of $2\theta = 17.5°$, 18.3°, 26.1°, 27.3°, and 30.0°, the diffracted peak of the $Li_4P_2S_6$ crystal structure appears, for example, in the vicinity of $2\theta = 16.9°$, 27.1°, and 32.5°, the diffraction peak of the $Li_7PS_6$ crystal structure appears, for example, in the vicinity of $2\theta = 15.3°$, 25.2°, 29.6°, and 31.0°, the diffraction peak of the $Li_7P_3S_{11}$ crystal structure appears, for example, in the vicinity of $2\theta = 17.8°$, 18.5°, 19.7°, 21.8°, 23.7°, 25.9°, 29.6°, and 30.0°, the diffraction peak of the $Li_{4-x}Ge_{1-x}P_xS_4$ system thio-LISICON Region II type crystal structure appears, for example, in the vicinity of $2\theta = 20.1°$, 23.9°, and 29.5°, and the diffraction peak of the crystal structure similar to the $Li_{4-x}Ge_{1-x}P_xS_4$ system thio-LISICON Region II type appears, for example, in the vicinity of $2\theta = 20.2°$ and 23.6°. Note that these peak positions may be shifted back and forth within a range of ±0.5°.

A crystalline sulfide solid electrolyte having the argyrodite type crystal structure having the structural skeleton of the above-described $Li_7PS_6$, in which a part of P is substituted with Si, is also preferred.

Examples of the compositional formulas of the argyrodite type crystal structure include a crystal structures represented by the compositional formulas $Li_{7-x}P_{1-y}Si_yS_6$ and $Li_{7+x}P_{1-y}Si_yS_6$ (x is -0.6 to 0.6, and y is 0.1 to 0.6). The argyrodite type crystal structure represented by this compositional formula is a cubic or orthorhombic, preferably a cubic crystal, and has peaks mainly appearing at positions of $2\theta = 15.5°$, 18.0°, 25.0°, 30.0°, 31.4°, 45.3°, 47.0°, and 52.0° in X-ray diffractometry using CuKα line.

Examples of the compositional formula of argyrodite type crystal structure include a compositional formula of $Li_{7-x-2y}PS_{6-x-y}Cl_x$ (0.8 ≤ x ≤ 1.7, 0 < y ≤ -0.25x + 0.5). The argyrodite type crystal structure represented by this compositional formula is preferably a cubic crystal, and has peaks mainly appearing at positions of $2\theta = 15.5°$, 18.0°, 25.0°, 30.0°, 31.4°, 45.3°, 47.0°, and 52.0° in X-ray diffractometry using CuKα line.

Further, examples of the compositional formulas of the argyrodite type crystal structure include a compositional formula of $Li_{7-x}PS_{6-x}H_{ax}$ (Ha is Cl or Br, x is preferably 0.2 to 1.8). The argyrodite type crystal structure represented by this compositional formula is preferably a cubic crystal, and has peaks mainly appearing at positions of $2\theta = 15.5°$, $18.0°$, $25.0°$, $30.0°$, $31.4°$, $45.3°$, $47.0°$, and $52.0°$ in X-ray diffractometry using CuK$\alpha$ line.

Note that these peak positions may be shifted back and forth within a range of $\pm 0.5°$.

The shape of the crystalline sulfide solid electrolyte is not particularly limited, and examples thereof include a particle shape.

The average particle diameter ($D_{50}$) of the particle shaped crystalline sulfide solid electrolyte is, for example, 0.01 $\mu$m or more, further 0.03 $\mu$m or more, 0.05 $\mu$m or more, 0.1 $\mu$m or more, and the upper limit is 200.0 $\mu$m or less, further 100.0 $\mu$m or less, 10.0 $\mu$m or less, 1.0 $\mu$m or less, and 0.5 $\mu$m or less.

(Application)

The sulfide solid electrolyte obtained by the production method of the present embodiment has high ionic conductivity and excellent battery performance, and thus is suitably used for a battery.

The sulfide solid electrolyte obtained by the production method of the present embodiment may be used for a positive electrode layer, a negative electrode layer, or an electrolyte layer. Each layer can be produced by a known method.

In addition, in the battery, a current collector is preferably used in addition to the positive electrode layer, the electrolyte layer, and the negative electrode layer, and a known current collector can be used. For example, a layer obtained by coating a material that reacts with the solid electrolyte, such as Au, Pt, Al, Ti, and Cu, with Au or the like can be used.

Examples

Hereinafter, the present invention will be specifically described with reference to Examples, but the present invention is not limited to these Examples.

(Measurement of Powder XRD Diffraction)

Powder X-ray diffraction (XRD) measurement was performed as follows.

Each of the powders of the sulfide solid electrolyte obtained in Examples and Comparative Examples was filled in a groove having a diameter of 20 mm and a depth of 0.2 mm, and was leveled with glass to obtain a sample. This sample was sealed with a Kapton film for XRD and measured under the following conditions without being exposed to air.

Measuring device: D2 PHASER, manufactured by Bruker Co., Ltd.

Tube voltage: 30 kV
Tube current: 10 mA
X-ray wavelength: Cu-K$\alpha$ line (1.5418 Å)
Optical system: concentration method
Slit configuration: Using solar slit 4°, divergence slit 1mm, K$\beta$ filter (Ni plate)
Detector: semiconductor detector
Measurement range: $2\theta$ = 10 to 60 deg
Step width, scan speed: 0.05 deg, 0.05 deg/second

(Measurement of Ionic Conductivity)

In the present examples, the ionic conductivity was measured as follows.

Circular pellets having diameters 10 mm (cross-sectional area S: 0.785 cm$^2$) and heights (L) of 0.1 to 0.3 cm were molded from the crystalline solid electrolytes obtained in Example and Comparative example, to obtain samples. Electrode terminals were taken from the top and bottom of the sample, and measured by an AC impedance method at 25°C (frequency range: 5 MHz to 0.5 Hz, amplitude: 10 mV), and a Cole-Cole plot was obtained. The real part Z' ($\Omega$) at the point where -Z" ($\Omega$) becomes minimum in the vicinity of the right end of an arc observed in a region on the high frequency side was defined as the bulk resistance R ($\Omega$) of the electrolyte, and the ionic conductivity $\sigma$ (S/cm) was calculated according to the following equations.

$$R = \rho(L/S)$$

$$\sigma = 1/\rho$$

(Example 1)

In a glove box under a nitrogen atmosphere, 0.3178 g of lithium sulfide, 0.5125 g of diphosphorus pentasulfide, 0.0707 g of lithium bromide, 0.1089 g of lithium iodide and 0.2218 g of elemental sulfur were mixed using a mortar and introduced into a 100-milliliter reaction vessel together with a stirrer, 40.04 mL of a mixed solvent containing 0.020 mL of ethanol (EtOH) and 40.02 mL of tetrahydrofuran (THF) (ethanol : tetrahydrofuran = 1.0 : 2001.0 (volume ratio), the total content of ethanol and tetrahydrofuran in all solvents is 100% by volume) was added under a nitrogen atmosphere, and the mixture was stirred for 10 minutes with a magnetic stirrer.

Subsequently, using a vacuum pump and oil bath, heating was performed under reduced pressure at room temperature (20°C) for 1 hour (first heating-1) and under reduced pressure at 130°C for 1 hour (first heating-2). Furthermore, the powder obtained by the first heating was heated under reduced pressure at 200°C for 2 hours (second heating) to obtain a powder.

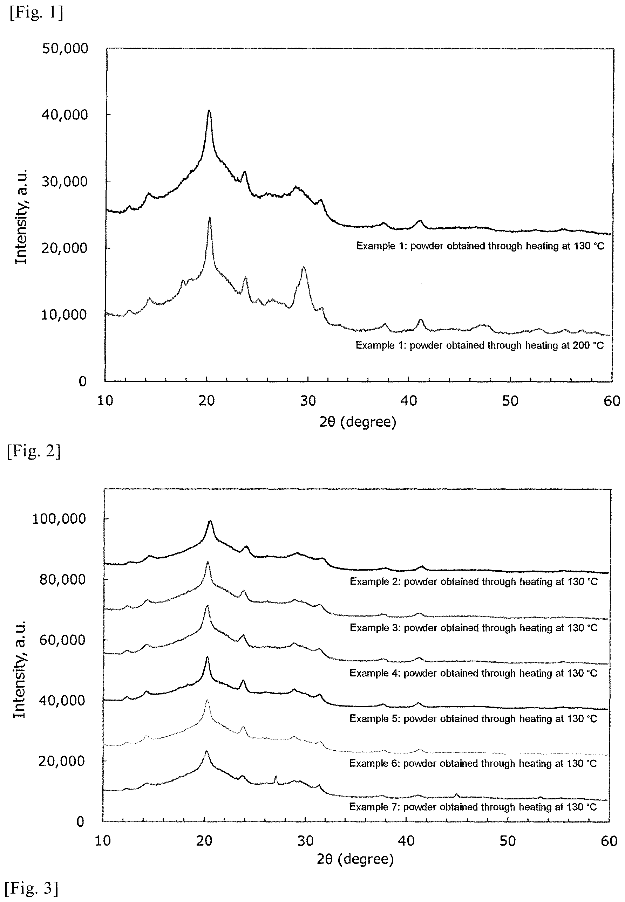

The powders obtained by the first heating at 130°C and the second heating at 200°C were subjected to powder XRD diffraction measurement. The X-ray diffraction spectra of the powders obtained by heating at 130°C and heating at 200°C are shown in Fig. 1.

In addition, the ionic conductivity of the powder obtained by heating at 200°C in Example 1 was measured and found to be 1.5 mS/cm.

(Examples 2 to 9)

Powders of Examples 2 to 9 were obtained in the same manner as in Example 1, except that the amount of elemental sulfur and the amount of the solvent in Example 1 were set to the conditions shown in Table 1.

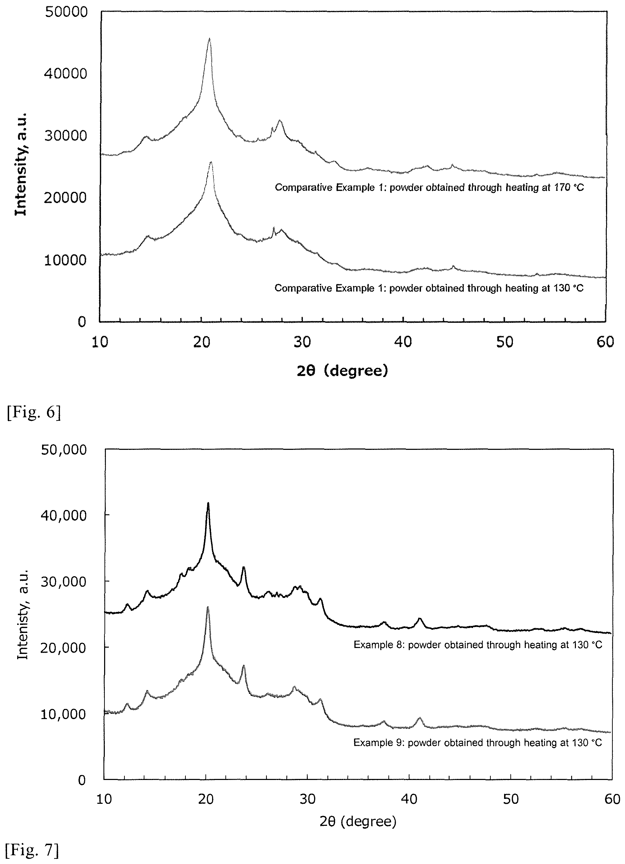

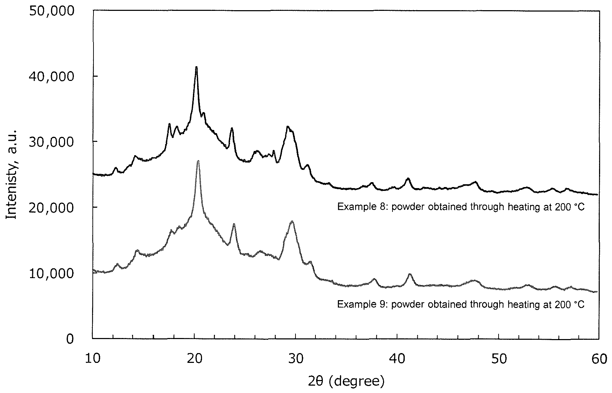

The powders obtained in Examples 2 to 9 were subjected to powder XRD diffraction measurement. The X-ray diffraction spectra of the powders obtained by heating at 130°C in Examples 2 to 7 are shown in Fig. 2, and the X-ray diffraction spectra of the powders obtained by heating at 200°C in Examples 2 to 7 are shown in Fig. 3. Further, the X-ray diffraction spectra of the powders obtained by heating at 130°C in Examples 8 and 9 are shown in Fig. 6, and the X-ray diffraction spectra of the powders obtained by heating at 200°C in Examples 8 and 9 are shown in Fig. 7.

The ionic conductivity was measured for the powders obtained by heating at 200°C in Examples 2 to 9. The results are shown in Table 1.

(Example 10)

In a glove box under an argon atmosphere, 0.2546 g of lithium sulfide, 0.3241 g of diphosphorus pentasulfide, and 0.3554 g of elemental sulfur were mixed using a mortar and introduced into a 100-milliliter reaction vessel together with a stirrer (reaction vessel 1). Similarly, 0.1236 g of lithium chloride and 0.1520 g of lithium bromide were mixed in a mortar and introduced together with a stirrer into another 100-milliliter reaction vessel (reaction vessel 2). In a nitrogen atmosphere, 60 mL of a mixed solvent of ethanol (EtOH) and tetrahydrofuran (THF) (59.0 parts by volume of tetrahydrofuran (THF) relative to 1.0 part by volume of ethanol (EtOH)) was added to the reaction vessel 1, and the mixture was stirred for 10 minutes with a magnetic stirrer. Next, the solution from the reaction vessel 1 was added to the reaction vessel 2, and further mixing was performed by stirring with a magnetic stirrer for 10 minutes.

Subsequently, using a vacuum pump and oil bath, heating was performed under reduced pressure at room temperature (20°C) for 1 hour (first heating-1) and under reduced pressure at 130°C for 1 hour (first heating-2). Furthermore, the powder obtained by the first heating was heated in an argon atmosphere at 250°C for 1 hour (second heating-1), and further heated in a nitrogen atmosphere at 430°C for 8 hours (second heating-2) to obtain a powder.

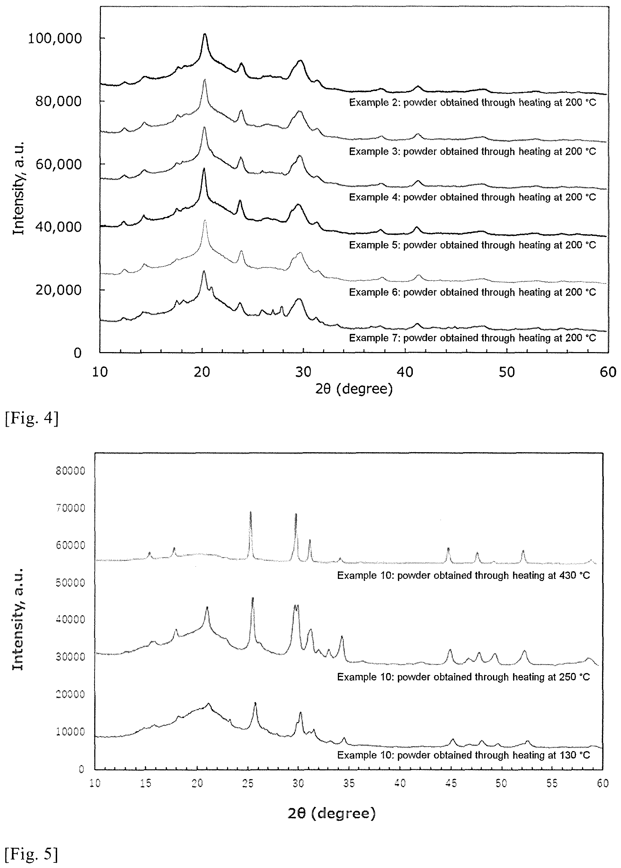

The X-ray diffraction spectra of the powders obtained by heating at 130°C, 250°C, and 430°C in Example 10 are shown in Fig. 4.

(Comparative Example 1)

In a glove box under a nitrogen atmosphere, 0.2590 g of lithium sulfide, 0.4177 g of diphosphorus pentasulfide, and 0.1808 g of elemental sulfur were mixed using a mortar and introduced into a 100-milliliter reaction vessel together with a stirrer (reaction vessel 1). Similarly, 0.1776 g of lithium iodide was weighed out and introduced together with a stirrer into another 100-milliliter reaction vessel (reaction vessel 2). In a nitrogen atmosphere, 32.62 mL of a mixed solvent of ethanol (EtOH), tetrahydrofuran (THF), and acetonitrile (ACN) (the total content of ethanol and tetrahydrofuran in the total solvent was 50.1% by volume) was added to the reaction vessel 1, and the mixture was stirred for 10 minutes with a magnetic stirrer. Next, the solution from the reaction vessel 1 was added to the reaction vessel 2, and further mixing was performed by stirring with a magnetic stirrer for 10 minutes.

Subsequently, using a vacuum pump and oil bath, heating was performed under reduced pressure at room temperature (20°C) for 1 hour (first heating-1) and under reduced pressure at 130°C for 1 hour (first heating-2). Furthermore, the powder obtained by the first heating was heated under reduced pressure at 170°C for 2 hours (second heating-1) to obtain a powder.

The X-ray diffraction spectra of the powders obtained by heating at 130°C and 170°C in Comparative Example 1 are shown in Fig. 5.

Table 1

| | | | Examples | | | | | |
|---|---|---|---|---|---|---|---|---|
| | | | 1 | 2 | 3 | 4 | 5 | 6 |
| Lithium sulfide ($Li_2S$) | g | | 0.3178 | 0.3178 | 0.6294 | 0.3178 | 0.6294 | 0.6294 |
| Diphosphorus pentasulfide ($P_2S_5$) | g | | 0.5125 | 0.5125 | 1.0149 | 0.5125 | 1.0149 | 1.0149 |
| Lithium chloride (LiCl) | g | | 0.0000 | 0.0000 | 0.0000 | 0.0000 | 0.0000 | 0.0000 |
| Lithium bromide (LiBr) | g | | 0.0707 | 0.0707 | 0.1400 | 0.0707 | 0.1400 | 0.1400 |
| Lithium iodide (LiI) | g | | 0.1089 | 0.1089 | 0.2157 | 0.1089 | 0.2157 | 0.2157 |
| Elemental sulfur (S) | g | | 0.2218 | 0.2218 | 0.4392 | 0.2218 | 0.6589 | 0.6589 |
| Total amount | g | | 1.2317 | 1.2317 | 2.4392 | 1.2317 | 2.6589 | 2.6589 |
| EtOH | mL | | 0.020 | 0.039 | 0.155 | 0.156 | 0.077 | 0.155 |
| THF | mL | | 40.020 | 40.000 | 79.130 | 39.880 | 79.200 | 79.130 |
| ACN | mL | | 0.000 | 0.000 | 0.000 | 0.000 | 0.000 | 0.000 |
| Total amount | mL | | 40.040 | 40.039 | 79.285 | 40.036 | 79.277 | 79.285 |
| Amount of elemental sulfur used ($S/Li_2S$) | mol/mol | | 1.00 | 1.00 | 1.00 | 1.00 | 1.50 | 1.50 |
| S | mol | | 0.007 | 0.007 | 0.014 | 0.007 | 0.021 | 0.021 |
| $Li_2S$ | mol | | 0.0069 | 0.0069 | 0.0137 | 0.0069 | 0.0137 | 0.0137 |
| Ethanol/$Li_2S$ | mol/mol | | 0.050 | 0.097 | 0.194 | 0.386 | 0.096 | 0.194 |
| Ethanol | mol | | 0.0003 | 0.0007 | 0.0027 | 0.0027 | 0.0013 | 0.0027 |
| THF/EtOH | mL/mL | | 2001.0 | 1025.6 | 510.5 | 255.6 | 1028.6 | 510.5 |
| THF + EtOH content | % by volume | | 100.0 | 100.0 | 100.0 | 100.0 | 100.0 | 100.0 |
| THF content | % by volume | | 99.95 | 99.90 | 99.80 | 99.61 | 99.90 | 99.80 |
| Solvent/raw material | mL/g | | 32.51 | 32.51 | 32.50 | 32.50 | 29.82 | 29.82 |
| Raw material supply method *1 | - | | A | A | A | A | A | A |
| First heating: Heating temperature | °C | | 20/130 | 20/130 | 20/130 | 20/130 | 20/130 | 20/130 |
| Second heating: Heating temperature | °C | | 200 | 200 | 200 | 200 | 200 | 200 |
| Ionic conductivity | mS/cm | | 1.5 | 1.7 | 1.2 | 1.2 | 1.3 | 1.2 |

Table 1 (continued)

| | | | Examples | | | | Comparative Example |
|---|---|---|---|---|---|---|---|
| | | | 7 | 8 | 9 | 10 | 1 |
| Lithium sulfide ($Li_2S$) | g | | 0.3178 | 0.3178 | 0.3178 | 0.2546 | 0.2590 |
| Diphosphorus pentasulfide ($P_2S_5$) | g | | 0.5125 | 0.5125 | 0.5125 | 0.3241 | 0.4177 |
| Lithium chloride (LiCl) | g | | 0.0000 | 0.0000 | 0.0000 | 0.1236 | 0.0000 |

(continued)

|  |  | Examples | | | | Comparative Example |
|---|---|---|---|---|---|---|
|  |  | 7 | 8 | 9 | 10 | 1 |
| Lithium bromide (LiBr) | g | 0.0707 | 0.0707 | 0.0707 | 0.1520 | 0.0000 |
| Lithium iodide (LiI) | g | 0.1089 | 0.1089 | 0.1089 | 0.0000 | 0.1776 |
| Elemental sulfur (S) | g | 0.1109 | 0.1996 | 0.2440 | 0.3554 | 0.1808 |
| Total amount | g | 1.1208 | 1.2095 | 1.2539 | 1.2097 | 1.0351 |
| EtOH | mL | 0.039 | 0.039 | 0.039 | 1.000 | 0.064 |
| THF | mL | 40.000 | 40.000 | 40.000 | 59.00 | 16.278 |
| ACN | mL | 0.000 | 0.000 | 0.000 | 0.000 | 16.278 |
| Total amount | mL | 40.039 | 40.039 | 40.039 | 60.000 | 32.620 |
| Amount of elemental sulfur used (S/Li$_2$S) | mol/mol | 0.50 | 0.90 | 1.10 | 2.00 | 1.00 |
| S | mol | 0.003 | 0.006 | 0.008 | 0.011 | 0.006 |
| Li$_2$S | mol | 0.0069 | 0.0069 | 0.0069 | 0.0055 | 0.0056 |
| Ethanol/Li$_2$S | mol/mol | 0.097 | 0.097 | 0.097 | 3.091 | 0.193 |
| Ethanol | mol | 0.0007 | 0.0007 | 0.0007 | 0.0171 | 0.001 |
| THF/EtOH | mL/mL | 1025.6 | 1025.6 | 1025.6 | 59.0 | 256.3 |
| THF + EtOH content | % by volume | 100.0 | 100.0 | 100.0 | 100.0 | 50.1 |
| THF content | % by volume | 99.90 | 99.90 | 99.90 | 98.33 | 49.90 |
| Solvent/raw material | mL/g | 35.72 | 33.10 | 31.93 | 49.599 | 31.513 |
| Raw material supply method *1 | - | A | A | A | B | C |
| First heating: Heating temperature | °C | 20/130 | 20/130 | 20/130 | 20/130 | 20/130 |
| Second heating: Heating temperature | °C | 200 | 200 | 200 | 250/430 | 170 |
| Ionic conductivity | mS/cm | 0.9 | 0.8 | 1.1 | 5.0 | - |

*1, Raw material supply methods A to C are as follows.
A: Lithium sulfide, diphosphorus pentasulfide, elemental sulfur, lithium bromide and lithium iodide were mixed at the same time.
B: Lithium sulfide, diphosphorus pentasulfide, and elemental sulfur were mixed, and then lithium chloride and lithium bromide were mixed.
C: Lithium sulfide, diphosphorus pentasulfide, and elemental sulfur were mixed, and then lithium iodide was mixed.

From the results of Figs. 1 to 3 and 6 and 7, the powders obtained by heating at 200°C in Examples 1 to 9, and the powders obtained by heating at 130°C in Examples 1 to 9 had peaks at 2θ = 20.3° and 23.9°, and were therefore confirmed to be crystalline sulfide solid electrolytes having a thio-LISICON Region II type crystal structure. Furthermore, the ionic conductivity of the powders obtained in these Examples was 0.8 to 1.7 mS/cm, respectively, and it was also confirmed that high conductivity could be obtained.

From the result of Fig. 4, the powders obtained by heating at 250 and 430°C in Example 10 had peaks at 2θ = 15.5°, 18.0°, 25.0°, 30.0°, 31.4°, 45.3°, 47.0°, and 52.0°, and were therefore confirmed to be crystalline sulfide solid electrolytes having an argyrodite type crystal structure. Furthermore, the ionic conductivity was 5.0 mS/cm, and it was also confirmed that high conductivity could be obtained.

From the result of Fig. 5, the powder obtained in Comparative Example 1 did not show peaks at 2θ = 20.3° and 23.9° derived from the thio-LISICON Region II type crystal structure, and peaks thought to be derived from $Li_7P_2S_8I$ or $Li_4PS_4I$ were observed at $2\theta = 20.8°$ and $27.9°$. Further, a peak due to lithium sulfide was also observed at $2\theta = 27.0°$, and it was found that the reaction did not proceed efficiently.

Industrial Applicability

According to the method for producing a sulfide solid electrolyte of the present embodiment, a sulfide solid electrolyte having improved ionic conductivity can be efficiently provided. The sulfide solid electrolyte obtained by the production method of the present embodiment is suitably used for batteries, in particular, batteries used for information-related devices such as personal computers, video cameras, and mobile phones, and communication devices.

**Claims**

1.   A method for producing a sulfide solid electrolyte, comprising

   mixing, in a solvent, a raw material-containing substance that contains a plurality of raw materials each containing at least one atom selected from a lithium atom, a phosphorus atom, a sulfur atom, and a halogen atom, and subsequently heating the mixture, wherein
   the solvent includes an organic solvent, which is an ether solvent and an alcohol solvent, in an amount of 60% by volume or more based on a total amount of the solvent, and
   the raw material-containing substance contains elemental sulfur and lithium sulfide.

2.   The method for producing a sulfide solid electrolyte according to claim 1, wherein the solvent is an ether solvent and an alcohol solvent.

3.   The method for producing a sulfide solid electrolyte according to claim 1 or 2, wherein the solvent includes an alcohol solvent, and the alcohol solvent is used in an amount of 0.030 moles or more and 5.0 moles or less based on 1.0 mole of the lithium sulfide.

4.   The method for producing a sulfide solid electrolyte according to any one of claims 1 to 3, wherein a content of the ether solvent based on the total amount of the solvent is 50.0% by volume or more.

5.   The method for producing a sulfide solid electrolyte according to any one of claims 1 to 4, wherein the halogen atom is at least one atom selected from a chlorine atom, a bromine atom, and an iodine atom.

6.   The method for producing a sulfide solid electrolyte according to any one of claims 1 to 5, wherein the heating is performed at a heating temperature of 20°C or higher and 500°C or lower.

7.   The method for producing a sulfide solid electrolyte according to claim 6, wherein the heating is performed at a heating temperature of 20°C or higher and 300°C or lower.

8.   The method for producing a sulfide solid electrolyte according to claim 7, wherein the heating is performed by a first heating with a heating temperature of 20°C or higher and lower than 150°C, and a second heating with a heating temperature of 150°C or higher and 300°C or lower.

9.   The method for producing a sulfide solid electrolyte according to claim 6, wherein the heating is performed at a heating temperature of 200°C or higher and 500°C or lower.

10.   The method for producing a sulfide solid electrolyte according to claim 9, wherein the heating is performed by a heating with a heating temperature of 200°C or higher and lower than 350°C, and a heating with a heating temperature of 350°C or higher and 500°C or lower.

11.   The method for producing a sulfide solid electrolyte according to any one of claims 1 to 10, wherein a crystalline sulfide solid electrolyte having a thio-LISICON Region II type crystal structure or a crystalline sulfide solid electrolyte having an argyrodite type crystal structure is produced.

[Fig. 1]

[Fig. 2]

[Fig. 3]

[Fig. 4]

[Fig. 5]

[Fig. 6]

[Fig. 7]

<div align="center">**INTERNATIONAL SEARCH REPORT**</div>

| International application No. |
|---|
| **PCT/JP2023/025217** |

**A. CLASSIFICATION OF SUBJECT MATTER**

*H01B 13/00*(2006.01)i; *H01M 10/0562*(2010.01)i
FI: H01B13/00 Z; H01M10/0562

According to International Patent Classification (IPC) or to both national classification and IPC

**B. FIELDS SEARCHED**

Minimum documentation searched (classification system followed by classification symbols)

H01B13/00; H01M10/0562

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| X | WO 2017/018456 A1 (FUJIFILM CORPORATION) 02 February 2017 (2017-02-02) paragraphs [0009]-[0230] | 1-7, 9 |
| Y | | 8, 10-11 |
| Y | JP 2020-87769 A (SEIKO EPSON CORP) 04 June 2020 (2020-06-04) paragraph [0041] | 8, 10 |
| Y | JP 2017-100907 A (IDEMITSU KOSAN CO) 08 June 2017 (2017-06-08) paragraph [0055] | 8, 10 |
| Y | WO 2019/098245 A1 (IDEMITSU KOSAN CO) 23 May 2019 (2019-05-23) claim 14, paragraph [0026] | 11 |
| Y | WO 2017/159667 A1 (IDEMITSU KOSAN CO) 21 September 2017 (2017-09-21) paragraphs [0084]-[0086] | 11 |

☐ Further documents are listed in the continuation of Box C.    ☑ See patent family annex.

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **22 August 2023** | **05 September 2023** |

| Name and mailing address of the ISA/JP | Authorized officer |
|---|---|
| **Japan Patent Office (ISA/JP)** **3-4-3 Kasumigaseki, Chiyoda-ku, Tokyo 100-8915** **Japan** | |
| | Telephone No. |

Form PCT/ISA/210 (second sheet) (January 2015)

INTERNATIONAL SEARCH REPORT
Information on patent family members

| International application No. |
| --- |
| **PCT/JP2023/025217** |

| Patent document cited in search report | | | Publication date (day/month/year) | Patent family member(s) | | | Publication date (day/month/year) |
| --- | --- | --- | --- | --- | --- | --- | --- |
| WO | 2017/018456 | A1 | 02 February 2017 | US 2018/0090787 A1 paragraphs [0011]-[0309] CN 107851841 A | | | |
| JP | 2020-87769 | A | 04 June 2020 | US 2020/0168947 A1 paragraph [0056] | | | |
| JP | 2017-100907 | A | 08 June 2017 | US 2017/0155170 A1 paragraph [0092] | | | |
| WO | 2019/098245 | A1 | 23 May 2019 | US 2020/0358132 A1 claim 14, paragraphs [0035]-[0036] CN 111344812 A | | | |
| WO | 2017/159667 | A1 | 21 September 2017 | US 2019/0074542 A1 paragraphs [0133]-[0136] EP 3432320 A1 CN 108780683 A KR 10-2018-0122348 A | | | |

Form PCT/ISA/210 (patent family annex) (January 2015)

**EP 4 553 861 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- JP 2014191899 A
- WO 2014192309 A
- WO 2018054709 A
- WO 2020105737 A
- WO 2021230189 A
- JP 2013016423 A

### Non-patent literature cited in the description

- *J. Mater. Chem. A*, 2019, vol. 7, 558-566
- All-solid Battery/Sulfide Electrolyte. *The 62nd Battery Symposium in Japan proceedings*, 29 November 2021
- *Adv. Energy Sustainability Res.*, 2022, vol. 3, 2200019
- **KANNO et al.** *Journal of The Electrochemical Society*, 2001, vol. 148 (7), A742-746
- *Solid State Ionics*, 2006, vol. 177, 2721-2725